# EUROPEAN PATENT SPECIFICATION

(11) **EP 4 589 147 B1**
(45) Date of publication and mention of the grant of the patent: **02.12.2026**
(21) Application number: 23888463.9
(22) Date of filing: 20.10.2023
(51) Int. Cl.: F04B 39/00, F04B 39/12, F04B 15/08, F04B 37/18, F04B 53/14

(54) **RECIPROCATING COMPRESSOR UNIT, AND METHOD FOR OPERATING COMPRESSOR UNIT**
HUBKOLBENVERDICHTEREINHEIT UND VERFAHREN ZUM BETRIEB EINER VERDICHTEREINHEIT
UNITÉ DE COMPRESSEUR ALTERNATIF ET PROCÉDÉ DE FONCTIONNEMENT D'UNITÉ DE COMPRESSEUR

(30) Priority: 11.11.2022 JP 2022181160
(43) Date of publication of application: 23.07.2025
(73) Proprietor: KABUSHIKI KAISHA KOBE SEIKO SHO (KOBE STEEL, LTD.), Hyogo 651-8585 (JP)
(72) Inventor: NAGURA, Kenji, Hyogo, 676-8670 (JP); KUBO, Kenji, Hyogo, 676-8670 (JP); MAEDA, Yugo, Hyogo, 676-8670 (JP); KONDO, Hikaru, Hyogo, 676-8670 (JP)
(74) Representative: TBK
(86) International application number: PCT/JP2023/037968
(87) International publication number: WO 2024/101112

(56) References cited:
- CN-U- 210 218 052
- CN-U- 213 016 690
- CN-U- 213 016 690
- JP-A- 2020 172 870
- JP-A- H07 119 634

## Description

### Technical Field

The present invention relates to a reciprocating compressor unit and a method for operating the compressor unit.

### Background Art

In recent years, in consideration of the environment, use of hydrogen for power generation, fuel for an automobile, and the like is considered, and demand for hydrogen is increasing. Low-temperature boil-off gas (BOG) such as liquefied natural gas (LNG) and liquid hydrogen (LH2) is recovered by a compressor and supplied to demand destinations such as engines. In particular, the boil-off gas generated from LH2 has a very low temperature. Therefore, if a configuration is adopted in which the compressor directly suctions the boil-off gas as it is, restrictions will be imposed, such as it is necessary to select materials suitable for extremely low temperatures, adopt design conditions that take into account the amount of thermal deformation, and implement strict heat insulation treatment.
Further, a reciprocating compressor unit, and method for operating compressor unit according to the preamble of claims 1 and 7 is known from CN 213 016 690 U.

### Citation List

### Patent Literature

Patent Literature 1: JP 2020-172870 A
Patent Literature 2: JP H07-119634 A

In that connection, the following problem is pointed out in Patent Literature 1. "In recent years, hydrogen has been attracting attention as a new energy source. When hydrogen is used as an energy source, it is assumed that hydrogen will be stored and transported in a liquefied state, like natural gas. However, hydrogen has the property that the liquefaction temperature is lower than the liquefaction temperature of air. Therefore, if facilities such as reciprocating compressors for natural gas and other gases are applied to hydrogen as is, there is a possibility of a trouble caused by cryogenic liquid hydrogen. For example, this may generate liquefied air around apparatuses to which liquid hydrogen is supplied."

Accordingly, Patent Literature 1 proposes various structures for the reciprocating compressor. For example, the reciprocating compressor includes an intermediate cylinder part that is disposed between a piston drive part and a container part to accommodate a piston rod. In the intermediate cylinder part, a first intermediate chamber, a second intermediate chamber, and a rod packing chamber are formed in order from the piston drive part side. The internal pressure of the first intermediate chamber is higher than the internal pressures of the second intermediate chamber and the rod packing chamber. The rod packing chamber is filled with hydrogen gas at room temperature. The first intermediate chamber is filled with nitrogen gas. A vent is provided at a position corresponding to the second intermediate chamber.

Patent Literature 1 discloses that this structure enables hydrogen gas leakage from the compression part to the piston drive part to be suppressed, and that suppressing the leakage of extremely low-temperature gas ensures reliable operations of the piston drive part.

However, even if the internal pressure of the first intermediate chamber is set higher than the internal pressures of the second intermediate chamber and the rod packing chamber, there is a risk that nitrogen gas in the first intermediate chamber may flow into the rod packing chamber. In addition, if the nitrogen gas comes into contact with the extremely low-temperature hydrogen gas (suction gas to the compressor), there is a possibility that the nitrogen gas may liquefy.

Meanwhile, in the reciprocating compressor disclosed in Patent Literature 2, the following configuration is disclosed. "The compressed gas branched from the discharge channel 7 is cooled by the gas cooler 23 and directed into the cooling chamber 22 via the discharge channel side part 28a of the cooling channel 28 inside the packing case 10, thereby directly cooling the piston rod 1. Subsequently, this compressed gas is returned to the suction channel 5 via the suction channel side part 28b of the cooling channel 28 inside the packing case 10."

In Patent Literature 2 with an object of cooling the piston rod 1, the compressed gas flows smoothly through the cooling chamber 22. Such a structure cannot necessarily be considered suitable for the object of avoiding contact between nitrogen gas and ultra-low temperature hydrogen gas (suction gas to the compressor).

### Summary of Invention

The object of the present invention is to implement a preferred sealing structure for a reciprocating compressor unit that handles the boil-off gas of liquefied hydrogen.

The above object is solved with a reciprocating compressor unit, and method for operating compressor unit having the features of claims 1 and 7. Further advantageous developments are laid down in the dependent claims.
A compressor unit according to the present invention is a reciprocating compressor unit for recovering a hydrogen gas that is a boil-off gas through a suction channel from a liquid hydrogen storage tank and supplying at least part of the recovered hydrogen gas to a demand destination including at least one of an engine, a power generation facility, or a boiler, the compressor unit including: a compression stage that compresses the hydrogen gas in the suction channel; and a crank mechanism that drives the compression stage. The compression stage includes: a cylinder part; a piston; a piston rod that connects the piston to the crank mechanism; a rod packing part that seals between the piston rod and the cylinder part; an adapter part that connects the cylinder part to a case of the crank mechanism; a nitrogen gas supply part that supplies a nitrogen gas into the adapter part; a leak gas exhaust part that exhausts the hydrogen gas that has leaked to the rod packing part to outside; and a hydrogen gas supply part that supplies the hydrogen gas to the rod packing part. The rod packing part includes: at least one packing ring part that comes into contact with the piston rod and seals between the piston rod and the cylinder part; an exhaust passage that is connected to the leak gas exhaust part and allows the hydrogen gas that is part of the gas compressed in the cylinder part and has leaked through the packing ring part to flow into the leak gas exhaust part; a gas seal part that forms a gas seal in a gap between the piston rod and the rod packing part by the hydrogen gas supplied from the hydrogen gas supply part at a position closer to the crank mechanism than the exhaust passage; and at least one other packing ring part that is disposed between the gas seal part and the exhaust passage. Pressure of the hydrogen gas in the gas seal part is higher than pressure of the hydrogen gas in the leak gas exhaust part.

A compressor unit according to the present invention is a reciprocating compressor unit for recovering a hydrogen gas that is a boil-off gas through a suction channel from a liquid hydrogen storage tank and supplying at least part of the recovered hydrogen gas to a demand destination including at least one of an engine, a power generation facility, or a boiler, the compressor unit including: a compression stage that compresses the hydrogen gas in the suction channel; and a crank mechanism that drives the compression stage. The compression stage includes: a cylinder part; a piston; a piston rod that connects the piston to the crank mechanism; a rod packing part that seals between the piston rod and the cylinder part; an adapter part that connects the cylinder part to a case of the crank mechanism; a nitrogen gas supply part that supplies a nitrogen gas into the adapter part; a hydrogen gas supply part that supplies the hydrogen gas to another part in the adapter part; and a leak gas exhaust part that exhausts the hydrogen gas that has leaked to the rod packing part to outside. The rod packing part includes: at least one packing ring part that comes into contact with the piston rod and seals between the piston rod and the cylinder part; an exhaust passage that is connected to the leak gas exhaust part and allows the hydrogen gas that is part of the gas compressed in the cylinder part and has leaked through the packing ring part to flow into the leak gas exhaust part; and at least one other packing ring part disposed closer to the crank mechanism than the exhaust passage. The adapter part includes a partition part that partitions an interior of the adapter part into a plurality of spaces. The hydrogen gas supply part is configured to supply the hydrogen gas to a space located on a most compression chamber side in the interior of the adapter part. The nitrogen gas supply part is configured to supply the nitrogen gas to at least one space located closer to the crank mechanism than the space located on the most compression chamber side in the interior of the adapter part. Pressure of the hydrogen gas in the space on the most compression chamber side is higher than pressure of the hydrogen gas in the leak gas exhaust part.

A method for operating the compressor unit according to the present invention includes performing supply of the nitrogen gas to the interior of the adapter part by the nitrogen gas supply part not only during an operation of the compression stage but also during stop of the compression stage.

### Brief Description of Drawings

FIG. 1 is a diagram schematically showing an overall configuration of a compressor unit according to a first embodiment.
FIG. 2 is a diagram schematically showing a compression stage provided in the compressor unit.
FIG. 3 is a diagram showing a configuration of a rod packing part provided in the compression stage.
FIG. 4 is a diagram for describing operations of the compressor unit.
FIG. 5 is a diagram schematically showing an overall configuration of a compressor unit according to a modification of the first embodiment.
FIG. 6 is a diagram schematically showing an overall configuration of a compressor unit according to a second embodiment.
FIG. 7 is a diagram schematically showing an overall configuration of a compressor unit according to a third embodiment.
FIG. 8 is a diagram schematically showing an overall configuration of a compressor unit according to a modification of the third embodiment.
FIG. 9 is a diagram schematically showing the overall configuration of the compressor unit according to the modification of the third embodiment.
FIG. 10 is a diagram schematically showing the overall configuration of the compressor unit according to the modification of the third embodiment.

### Description of Embodiments

In the following, embodiments of the present invention will be described in detail with reference to the drawings.

### (First Embodiment)

A compressor unit according to the present embodiment is configured to recover a hydrogen gas, which is a boil-off gas, from a liquid hydrogen storage tank, compress the recovered hydrogen gas, and supply the compressed hydrogen gas to a demand destination. The boil-off gas, which is a hydrogen gas, is at about -253°C. As the demand destination, at least one of an engine, a power generation facility, or a boiler is included. However, the demand destination may also include, in addition thereto, for example, facilities such as a gas combustion facility, flare facility, and vent, that is, facilities other than facilities that utilize gas as an energy source. The hydrogen gas discharged from the compressor unit does not necessarily need to be supplied directly to the demand destination. For example, after being filled in a tank or the like, the hydrogen gas may be supplied to the demand destination, by various means such as transportation of the tank or through gas piping connected to the tank.

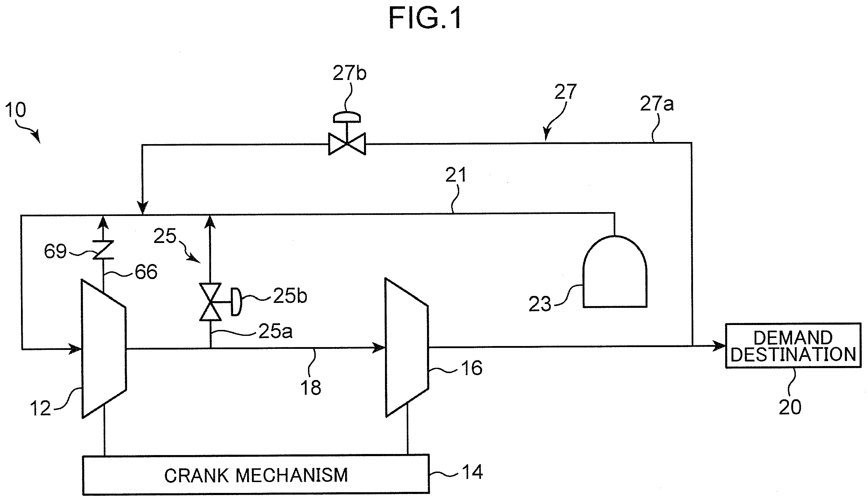

As shown in FIG. 1, the compressor unit 10 includes a compression stage (first compression stage) 12 for compressing the hydrogen gas and a crank mechanism 14 for driving the compression stage 12. The compressor unit 10 includes a second compression stage 16 that further compresses the hydrogen gas compressed in the compression stage 12. That is, the compression stage 12 is connected to a discharge channel 18, and the hydrogen gas compressed by the compression stage 12 is discharged into the discharge channel 18. The second compression stage 16 is provided in the discharge channel 18. The hydrogen gas compressed by the second compression stage 16 is supplied to a demand destination 20.

The compression stage 12 is connected to a liquid hydrogen storage tank 23 via a suction channel 21. Therefore, the boil-off gas that is a liquefied gas generated inside the liquid hydrogen storage tank 23 is suctioned into the compression stage 12 through the suction channel 21.

The crank mechanism 14 drives the compression stage 12 and the second compression stage 16 collectively. Note that the present embodiment is not limited to this configuration, but may be, for example, a configuration in which the second compression stage 16 is omitted and the crank mechanism 14 drives only the single compression stage 12. In addition, the compressor unit 10 may be provided with one or more compression stages that further compress the hydrogen gas compressed by the second compression stage 16.

The compressor unit 10 includes a spillback part (first spillback part) 25 for returning the hydrogen gas discharged from the compression stage 12 to the suction channel 21, and a second spillback part 27 for returning the hydrogen gas discharged from the second compression stage 16 to the suction channel 21.

The spillback part 25 includes a spillback channel 25a and a spillback valve 25b including a valve disposed in the spillback channel 25a and having an adjustable opening. One end of the spillback channel 25a is connected to a portion of the discharge channel 18 upstream the second compression stage 16, while the other end is connected to the suction channel 21. By controlling the opening degree of the spillback valve 25b, the pressure and flow rate of the hydrogen gas suctioned into the second compression stage 16 are adjusted. Note that it is possible to omit the spillback part 25.

The second spillback part 27 includes a second spillback channel 27a and a second spillback valve 27b including a valve disposed in the second spillback channel 27a and having an adjustable opening. One end of the second spillback channel 27a is connected to a portion of the discharge channel 18 downstream the second compression stage 16, while the other end is connected to the suction channel 21. By controlling the opening degree of the second spillback valve 27b, the pressure and flow rate of the hydrogen gas supplied to the demand destination 20 are adjusted. Note that when the main purpose is to equalize the pressure between the suction channel 21 and the discharge channel 18 while the compressor unit 10 is stopped, a manual valve or an ON-OFF valve may be adopted as the second spillback valve 27b.

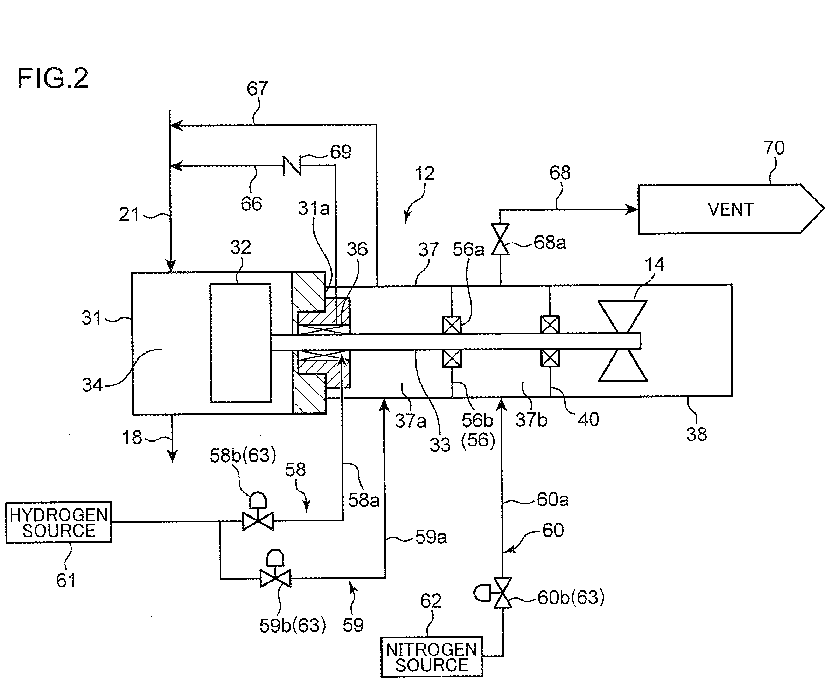

As shown in FIG. 2, the compression stage 12 is configured using a reciprocating compression mechanism. That is, the compression stage 12 includes a cylinder part 31, a piston 32 disposed inside the cylinder part 31, and a piston rod 33 connected to the piston 32. The piston rod 33 is connected to the crank mechanism 14. By the piston 32 reciprocating inside the cylinder part 31, the hydrogen gas is compressed inside a compression chamber 34.

Note that FIG. 2 shows the compression stage 12 having a double acting structure, but the compression stage 12 may also adopt a single acting structure. The compression stage 12 does not necessarily have to be configured using a single cylinder or compression stage, but may be configured using a plurality of parallel compression stages. That is, the compression stage 12 may be configured such that the hydrogen gas is compressed and pressurized by the piston 32 inside each of the plurality of cylinder parts 31 connected in parallel.

The compression stage 12 includes a rod packing part 36 provided on the cylinder part 31, an adapter part 37 disposed adjacent to the cylinder part 31 and connected to the cylinder part 31, and a crankcase 38, which is a case that accommodates a crankshaft, which is a part of the crank mechanism 14. The crankcase 38 is one element that constitutes the crank mechanism 14.

The adapter part 37 is formed in a cylindrical shape. In the space inside the adapter part 37, the piston rod 33 is disposed. One end of the adapter part 37 in the longitudinal direction is connected to the cylinder part 31. The other end of the adapter part 37 in the longitudinal direction is connected to the crankcase 38. At this other end, a partition wall 40 is provided to separate the internal space of the adapter part 37 from the space inside the crankcase 38.

The rod packing part 36 is fixed to a rear head 31a, which is a part of the cylinder part 31. The rod packing part 36 is provided to prevent the hydrogen gas in the compression chamber 34 of the cylinder part 31 from leaking out of the cylinder part 31 through between the rear head 31a and the piston rod 33. That is, the rod packing part 36 seals between the piston rod 33 and the cylinder part 31. The rear head 31a is provided with a through hole, not shown in the figure, through which the piston rod 33 passes, and the rod packing part 36 is disposed inside the through hole.

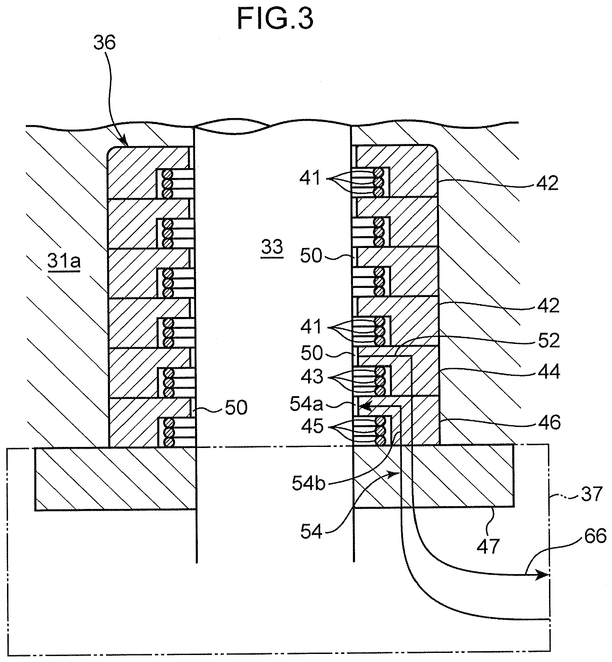

As shown in FIG. 3, the rod packing part 36 includes at least one packing ring part (first packing ring part 41), a case part (first case part 42) that accommodates the first packing ring part 41, at least one other packing ring part (second packing ring part 43), another case part (second case part 44) that accommodates the second packing ring part 43, at least one further packing ring part (third packing ring part 45), and a further case part (third case part 46) that accommodates the third packing ring part 45. The second packing ring part 43 and the second case part 44 are disposed on the opposite side of the compression chamber 34 (crank mechanism 14 side) with respect to the first packing ring part 41 and the first case part 42. The third packing ring part 45 and the third case part 46 are disposed on the opposite side of the compression chamber 34 (crank mechanism 14 side) with respect to the second packing ring part 43 and the second case part 44.

Note that in the configuration shown in FIG. 3, each of a plurality of the first case parts 42 is provided with a plurality of the first packing ring parts 41, while one second case part 44 is provided with a plurality of the second packing ring parts 43, and one third case part 46 is provided with a plurality of the third packing ring parts 45. However, the present embodiment is not limited to this configuration. For example, the present embodiment may have a configuration in which each of the case parts 42, 44, and 46 may be provided with a single packing ring part 41, 43, or 45. However, by disposing the plurality of packing ring parts 41, 43, and 45 for each of the case parts 42, 44, and 46, the sealing performance can be further improved, making it more suitable for the high-pressure compression stage 12.

The first case part 42, the second case part 44, and the third case part 46 are arranged in the direction in which the piston rod 33 extends and are disposed inside the through hole of the rear head 31a. In this state, the first case part 42, the second case part 44, and the third case part 46 are attached to the rear head 31a from the crank mechanism 14 side by a flange part 47.

Each of the first case part 42, the second case part 44, and the third case part 46 includes a through hole formed to allow the piston rod 33 to penetrate. In each of the first case part 42, the second case part 44, and the third case part 46, a gap 50 is formed between the inner peripheral edge that defines the through hole and the outer peripheral surface of the piston rod 33.

The packing ring parts 41, 43, and 45 are arranged in the direction in which the piston rod 33 extends and are disposed to surround the piston rod 33. The packing ring parts 41, 43, and 45 are deformed to be appressed to the outer peripheral surface of the piston rod 33 by a high-pressure hydrogen gas. Note that the packing ring parts 41, 43, and 45 may be formed to a size appressed to the outer peripheral surface of the piston rod 33 even in a state where the pressure of the high-pressure hydrogen gas is not applied, or may be configured to be appressed to the outer peripheral surface by being pressed by springs.

The rod packing part 36 is provided with an exhaust passage 52 to pass between the first packing ring part 41 and the second packing ring part 43. The exhaust passage 52 is a passage for allowing the hydrogen gas that has leaked through the first packing ring part 41 to the second packing ring part 43 side to flow into a leak gas exhaust part 66 described later. The exhaust passage 52 opens into the gap 50 between the second case part 44 and the outer peripheral surface of the piston rod 33. The exhaust passage 52 is connected to the leak gas exhaust part 66 described later, allowing the hydrogen gas that has leaked into the gap 50 between the second case part 44 and the outer peripheral surface of the piston rod 33 to flow into the leak gas exhaust part 66 described later.

In addition, the rod packing part 36 is provided with a gas seal part 54. The gas seal part 54 forms a gas seal 54a in the gap 50 between the outer peripheral surface of the piston rod 33 and the third case part 46 (rod packing part 36) by using the hydrogen gas from a first hydrogen gas supply part 58 described later (see FIG. 2). The gas seal part 54 includes an introduction path 54b formed in the third case part 46 and connected to a hydrogen channel 58a of the first hydrogen gas supply part 58 described later. The third packing ring part 45 is located on the opposite side of the second packing ring part 43 and the first packing ring part 41 with respect to the gas seal 54a. In addition, the gas seal 54a is located closer to the adapter part 37 (first space 37a) than the exhaust passage 52.

As shown in FIG. 2, the adapter part 37 includes a partition part 56 that partitions the internal space into a space on the compression chamber 34 side (first space 37a) and a space on the crank mechanism 14 side (second space 37b). In the form shown in FIG. 2, the partition part 56 is configured using a single partition member 56b. The piston rod 33 also penetrates the partition part 56. A seal part 56a is provided at the peripheral edge of the through hole that allows the piston rod 33 to penetrate in the partition member 56b (partition part 56).

The compression stage 12 includes the hydrogen gas supply part (first hydrogen gas supply part 58) that supplies the hydrogen gas to the rod packing part 36, another hydrogen gas supply part (second hydrogen gas supply part 59) that supplies the hydrogen gas to the first space 37a inside the adapter part 37, and a nitrogen gas supply part 60 that supplies a nitrogen gas to the second space 37b inside the adapter part 37.

The first hydrogen gas supply part 58 includes the hydrogen channel 58a connected to a hydrogen gas source 61. The first hydrogen gas supply part 58 is configured to supply the hydrogen gas from the hydrogen gas source 61 to the gas seal part 54 in the rod packing part 36 through the hydrogen channel 58a. The first hydrogen gas supply part 58 supplies the hydrogen gas to the gap 50 where the packing ring parts are present on both sides (that is, the gap 50 between the first packing ring part 41 and the second packing ring part 43). The hydrogen gas source 61 accommodates the hydrogen gas at room temperature.

The second hydrogen gas supply part 59 includes a second hydrogen channel 59a connected to the hydrogen channel 58a. The second hydrogen channel 59a is connected to a supply port formed in the outer peripheral wall that forms the first space 37a in the adapter part 37. The second hydrogen gas supply part 59 supplies the hydrogen gas from the hydrogen gas source 61 to the first space 37a inside the adapter part 37 through the second hydrogen channel 59a. Therefore, it can be said that the temperature of the hydrogen gas in the first space 37a is higher than the liquefaction temperature of the nitrogen gas in the second space 37b.

The nitrogen gas supply part 60 includes a nitrogen channel 60a connected to a nitrogen gas source 62. The nitrogen channel 60a is connected to a supply port formed in the outer peripheral wall that forms the second space 37b in the adapter part 37. The nitrogen gas supply part 60 supplies the nitrogen gas from the nitrogen gas source 62 to the second space 37b inside the adapter part 37 through the nitrogen channel 60a. The nitrogen gas source 62 accommodates the nitrogen gas at room temperature.

The hydrogen channel 58a is provided with a first hydrogen valve 58b, which is a valve that adjusts the pressure of the hydrogen gas flowing through the hydrogen channel 58a. The second hydrogen channel 59a of the second hydrogen gas supply part 59 is provided with a second hydrogen valve 59b, which is a valve that adjusts the pressure of the hydrogen gas flowing through the second hydrogen channel 59a. The nitrogen channel 60a is provided with a nitrogen valve 60b, which is a valve that adjusts the pressure of the nitrogen gas flowing through the nitrogen channel 60a.

The first hydrogen valve 58b, the second hydrogen valve 59b, and the nitrogen valve 60b constitute a pressure adjusting means 63 that adjusts at least one of the pressures of the hydrogen gas supplied by the first hydrogen gas supply part 58, the pressures of the hydrogen gas supplied by the second hydrogen gas supply part 59, and the pressure of the nitrogen gas supplied by the nitrogen gas supply part 60. For example, if the pressure of the hydrogen gas in the gas seal part 54 is defined as pressure P1, the pressure of the hydrogen gas in the first space 37a inside the adapter part 37 is defined as pressure P2, and the pressure of the nitrogen gas in the second space 37b inside the adapter part 37 is defined as pressure P3, then at least one of the first hydrogen valve 58b, the second hydrogen valve 59b, and the nitrogen valve 60b is adjusted such that the relationship of the pressure P1 > pressure P2 > pressure P3 is established. That is, since the pressure in the first space 37a where the hydrogen gas at room temperature is introduced is higher than the pressure in the second space 37b where the nitrogen gas is introduced, the nitrogen gas in the second space 37b is prevented from intruding into the first space 37a. Since the pressure in the gas seal part 54 is higher than the pressure in the first space 37a, even if the nitrogen gas intrudes into the first space 37a, the nitrogen gas is prevented from intruding into the rod packing part 36.

The compression stage 12 includes the leak gas exhaust part 66 that exhausts the leak gas (hydrogen gas) from the rod packing part 36, a first exhaust part 67 that exhausts the hydrogen gas in the first space 37a, and a second exhaust part 68 that exhausts the nitrogen gas in the second space 37b.

The leak gas exhaust part 66 includes a pipe member connected to the rod packing part 36 to communicate with the exhaust passage 52 provided in the rod packing part 36 (see FIG. 3). The leak gas exhaust part 66 is connected to the suction channel 21 for allowing the hydrogen gas to flow into the compression chamber 34 of the compression stage 12. Since the exhaust passage 52 communicates with the leak gas exhaust part 66, the hydrogen gas that has leaked from the compression chamber 34 and passed through the first packing ring part 41 can be returned to the suction channel 21 through the exhaust passage 52 and the leak gas exhaust part 66. The leak gas exhaust part 66 is provided with a check valve 69 that prevents the hydrogen gas from flowing toward the rod packing part 36. Note that the leak gas exhaust part 66 may be connected to a vent 70 instead of being connected to the suction channel 21 of the compression stage 12. In addition, in the second compression stage 16 as well, similarly to the compression stage 12, a leak gas exhaust part (second leak gas exhaust part) may be provided to communicate with the exhaust passage provided in the rod packing part. The second leak gas exhaust part is connected to the suction channel 21.

The first exhaust part 67 is connected to the adapter part 37 to open to the first space 37a. That is, one end of the first exhaust part 67 is connected to an exhaust port formed in the outer peripheral wall that forms the first space 37a in the adapter part 37. Meanwhile, the other end of the first exhaust part 67 is connected to the suction channel 21 of the compression stage 12. Therefore, the hydrogen gas in the first space 37a can be returned to the compression chamber 34 through the first exhaust part 67 and the suction channel 21. Note that the first exhaust part 67 may be connected to the vent 70 instead of being connected to the suction channel 21 of the compression stage 12.

The second exhaust part 68 is connected to the adapter part 37 to open to the second space 37b. That is, one end of the second exhaust part 68 is connected to an exhaust port formed in the outer peripheral wall that forms the second space 37b in the adapter part 37. Meanwhile, the other end of the second exhaust part 68 is connected to the vent 70. Note that the second exhaust part 68 may also serve the role of collecting the drain generated in the second space 37b, and in this case, a drain pot or the like may be provided in the second exhaust part 68.

The second exhaust part 68 is provided with an opening and closing valve 68a. The opening and closing valve 68a constitutes a release side pressure adjusting means that releases the nitrogen gas when the pressure at the exhaust port of nitrogen gas in the adapter part 37 becomes equal to or higher than predetermined pressure. Therefore, when the pressure in the second space 37b in the adapter part 37 becomes equal to or higher than the predetermined pressure, the opening and closing valve 68a opens, thereby releasing the nitrogen gas in the second space 37b to the vent 70. That is, the opening and closing valve 68a may be configured using a relief valve.

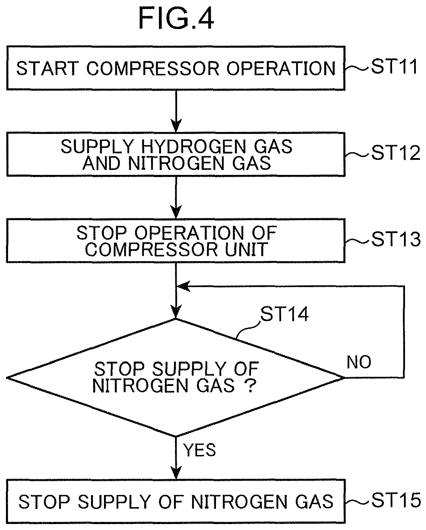

Here, an operation of stopping the compressor unit 10 will be described. As shown in FIG. 4, in the compressor unit 10, when the crank mechanism 14 operates, the piston 32 operates. As a result, the hydrogen gas, which is a boil-off gas, is suctioned into the compression chamber 34 from the suction channel 21, and the hydrogen gas is compressed (step ST11).

While the crank mechanism 14 is being driven, the first hydrogen valve 58b, the second hydrogen valve 59b, and the nitrogen valve 60b are opened. Therefore, the hydrogen gas is supplied to the gas seal part 54 by the first hydrogen gas supply part 58, the hydrogen gas is supplied to the first space 37a inside the adapter part 37 by the second hydrogen gas supply part 59, and the nitrogen gas is supplied to the first space 37a inside the adapter part 37 by the nitrogen gas supply part 60 (step ST12). At this time, the relationship of pressure P1 (pressure of the hydrogen gas inside the gas seal part 54) > pressure P2 (pressure of the hydrogen gas in the first space 37a inside the adapter part 37) > pressure P3 (pressure of the nitrogen gas in the second space 37b inside the adapter part 37) is established. Therefore, the nitrogen gas is prevented from intruding into the first space 37a from the second space 37b. Even if the nitrogen gas intrudes into the first space 37a, the nitrogen gas is prevented from intruding into the rod packing part 36.

Upon receipt of a command to stop the compressor unit 10, the compressor unit 10 stops the operation (step ST13). At this time, the supply of the nitrogen gas by the nitrogen gas supply part 60 continues. That is, the supply of the nitrogen gas into the adapter part 37 is performed not only during the operation of the compression stage 12 but also during the stop of the compression stage 12. That is, an exhaust pipe, which is not shown and connected to the exhaust port of the space on the crank mechanism 14 side of the adapter part 37, is often open to the atmosphere. Therefore, when the supply of the nitrogen gas is stopped, the atmosphere may intrude into the space on the crank mechanism 14 side of the adapter part 37. Therefore, the supply of the nitrogen gas is continued to prevent the atmosphere from intruding into the second space 37b during the stop of the compression stage 12.

During the stop of the compression stage 12, a determination is made whether to stop the supply of nitrogen gas by the nitrogen gas supply part 60 (step ST14). That is, while the compression stage 12 is at a low temperature, the supply of nitrogen gas is continued, whereas when the compression stage 12 returns to room temperature, the problem of condensation no longer occurs. Therefore, a determination is made as to whether the temperature at a predetermined location of the compression stage 12 (temperature detected by the temperature detector, not shown) has returned to a predetermined temperature that has been set in advance (for example, a temperature at which condensation is estimated not to occur on the piston rod 33). Then, when the determination in step ST14 is YES, the supply of nitrogen gas by the nitrogen gas supply part 60 is stopped (step ST15). Note that while the nitrogen gas is supplied, the supply of the hydrogen gas may be continued or stopped. The supply of nitrogen gas during the stop of the compressor unit 10 may be continuously performed, but even in this case, the supply of nitrogen gas may be stopped during maintenance or other times.

As described above, in the present embodiment, the rod packing part 36 is provided with the exhaust passage 52, and the exhaust passage 52 is connected to the leak gas exhaust part 66. Therefore, the hydrogen gas that has leaked through the first packing ring part 41 is exhausted to the outside of the rod packing part 36 and the adapter part 37 through the exhaust passage 52 and the leak gas exhaust part 66. The rod packing part 36 is provided with the gas seal part 54 using the hydrogen gas, closer to the crankcase 38 than the exhaust passage 52, and the pressure of the hydrogen gas in the gas seal part 54 is higher than the pressure in the leak gas exhaust part 66. This prevents the boil-off gas (suction gas) of the liquefied hydrogen, which is a low-temperature gas compressed in the cylinder part 31, from intruding beyond the gas seal part 54 into the adapter part 37 side and the crankcase 38 side, thereby preventing the liquefaction of nitrogen gas.

In the gas seal 54a of the rod packing part 36, the hydrogen gas is used. Therefore, even if the seal gas leaks into the cylinder part 31, unexpected situations, such as liquefaction that occurs when cooled by the suction gas (hydrogen gas) can be prevented, better than when a different type of gas is used as the seal gas.

In the present embodiment, the pressure of hydrogen gas in the gas seal part 54 provided in the rod packing part 36 is higher than the pressure of nitrogen gas in the adapter part 37. Therefore, the nitrogen gas supplied to the adapter part 37 can be prevented from getting over the gas seal part 54 provided in the rod packing part 36. Therefore, the leak gas of the boil-off gas (suction gas) of the liquefied hydrogen, which is a low-temperature gas compressed in the cylinder part 31, is more reliably prevented from coming into direct contact with the nitrogen gas.

In the present embodiment, the space inside the adapter part 37 is partitioned into the first space 37a and the second space 37b by the partition member 56b (partition part 56), and moreover, the temperature of the hydrogen gas in the first space 37a supplied by the second hydrogen gas supply part 59 is higher than the liquefaction temperature of the nitrogen gas in the second space 37b. Therefore, the liquefaction of the nitrogen gas can be prevented.

In the present embodiment, at least one of the first hydrogen valve 58b, the second hydrogen valve 59b, and the nitrogen valve 60b is adjusted such that the relationship of pressure P1 > pressure P2 > pressure P3 is established. Therefore, the nitrogen gas does not flow from the second space 37b into the first space 37a, and thus the nitrogen gas does not flow into the rod packing part 36. Therefore, the liquefaction of the nitrogen gas can be prevented.

A configuration is adopted such that, as long as the pressure in the second space 37b does not become excessive, the opening and closing valve 68a of the second exhaust part 68 is closed, and the nitrogen gas is retained in the second space 37b of the adapter part 37. This allows the consumption amount of the nitrogen gas to be reduced more than in a configuration that includes continuous purging.

The cylinder part 31, the piston 32, and the piston rod 33, which are components of the compression stage 12, become low in temperature during operation, and even when the compressor unit 10 stops, these components do not immediately return to room temperature, but instead remain in a low-temperature state for an extended period. Meanwhile, when the supply of nitrogen gas is stopped, the atmosphere may intrude into the second space 37b of the adapter part 37. Therefore, if the atmosphere intrudes into the second space 37b while the piston rod 33 remains in a low-temperature state, there is a risk that condensation may occur on the piston rod 33. In that case, rusting of internal components and condensation that adheres to the surface of the piston rod 33 can cause the packing ring parts 41, 43, and 45 to lose sealing functions. However, the nitrogen gas is supplied not only during the operation but also during stop of the compression stage 12, preventing rusting of the internal components and deterioration of the sealing functions.

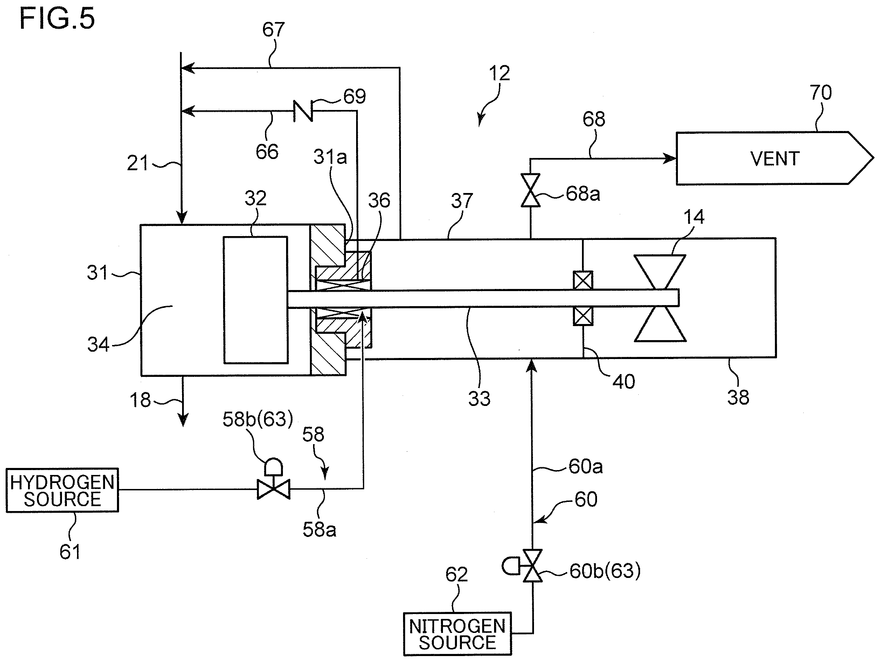

Note that in the present embodiment, the interior of the adapter part 37 is partitioned by the partition member 56b (partition part 56) into the first space 37a and the second space 37b, and the second hydrogen gas supply part 59 is provided to supply the hydrogen gas to the first space 37a. However, the present embodiment is not limited to this configuration. For example, as shown in FIG. 5, the partition part 56 and the second hydrogen gas supply part 59 may be omitted, and a configuration may be adopted in which the nitrogen gas supply part 60 supplies the nitrogen gas to the space inside the adapter part 37.

In the aforementioned embodiment, the pressure of the hydrogen gas in the gas seal part 54 is adjusted to be higher than the pressure of the nitrogen gas in the adapter part 37. However, the present embodiment is not limited to this configuration. For example, if the pressure P2 of the hydrogen gas in the first space 37a is higher than the pressure P3 of the nitrogen gas in the second space 37b, then the pressure P1 of the hydrogen gas in the gas seal part 54 may be equal to or lower than the pressure P3 of the nitrogen gas in the adapter part 37.

In the aforementioned embodiment, to establish the relationship of pressure P1 > pressure P2 > pressure P3, at least one of the first hydrogen valve 58b, the second hydrogen valve 59b, and the nitrogen valve 60b is adjusted. However, the present embodiment is not limited to this configuration. For example, to establish the relationship of pressure P1 > pressure P3 > pressure P2, at least one of the first hydrogen valve 58b, the second hydrogen valve 59b, and the nitrogen valve 60b may be adjusted. That is, to establish the relationship of pressure P1 > pressure P3 > pressure P2, the first hydrogen valve 58b, the second hydrogen valve 59b, and the nitrogen valve 60b may constitute a supply side pressure adjusting means to adjust the pressure of at least one of the first hydrogen gas supply part 58, the second hydrogen gas supply part 59, and the nitrogen gas supply part 60. In this case, it is possible to more actively prevent the leakage of the hydrogen gas, which is a flammable gas, to the crankcase 38 side. That is, since the pressure P3 in the second space 37b is higher than the pressure P2 in the first space 37a, it is possible to prevent the hydrogen gas in the first space 37a from leaking out to the crankcase 38 side.

In this case as well, as long as the pressure P3 in the second space 37b does not become excessive, the opening and closing valve 68a of the second exhaust part 68 is closed. Therefore, the nitrogen gas can be retained in the second space 37b of the adapter part 37, which allows the consumption amount of the nitrogen gas to be reduced more than in a configuration that includes continuous purging.

In the present embodiment, the first exhaust part 67 that exhausts the hydrogen gas in the first space 37a and the second exhaust part 68 that exhausts the nitrogen gas in the second space 37b are provided. However, the first exhaust part 67 and the second exhaust part 68 may be omitted. That is, the first space 37a may have a sealed structure, have a configuration in which the hydrogen gas that flows into the first space 37a is not exhausted to the outside, and have a structure in which the pressure inside the first space 37a is maintained at predetermined pressure. The second space 37b may have a sealed structure, have a configuration in which the nitrogen gas in the second space 37b is not exhausted to the outside, and have a structure in which the pressure inside the second space 37b is maintained at predetermined pressure. In this case as well, the pressure adjusting means 63 is adjusted to maintain the aforementioned pressure relationship. This configuration can be applied to the second embodiment, third embodiment, and their modifications, which will be described later.

### (Second Embodiment)

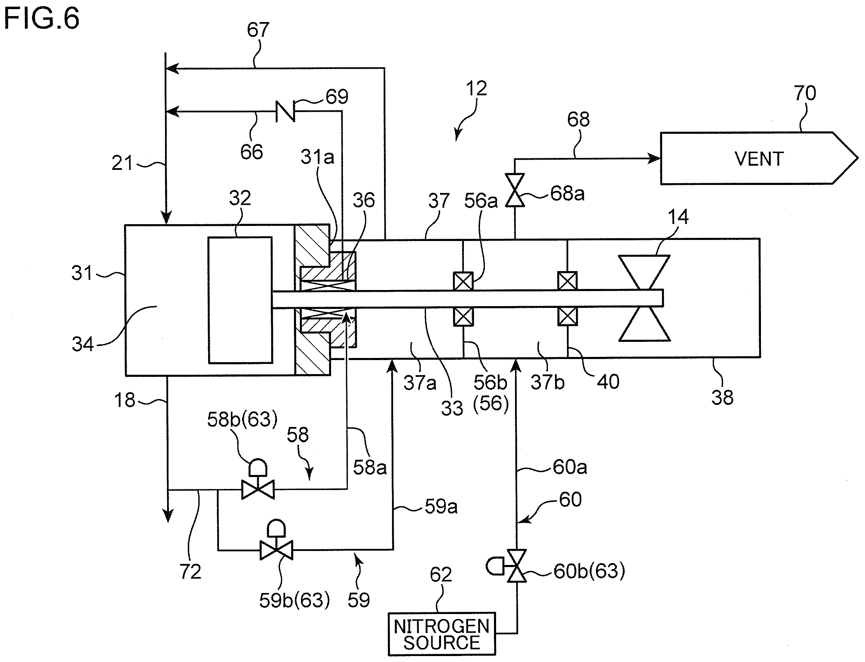

FIG. 6 shows the second embodiment. Note that here, the same components as components of the first embodiment are denoted with the same reference numerals, and detailed descriptions thereof will be omitted.

In the second embodiment, a feed line 72 is provided to connect a hydrogen channel 58a of a first hydrogen gas supply part 58 and a discharge channel 18. That is, in the first embodiment, the hydrogen channel 58a is connected to the hydrogen gas source 61, whereas in the second embodiment, the hydrogen channel 58a is connected to the discharge channel 18 via the feed line 72. The feed line 72 can send part of the hydrogen gas discharged from a compression stage 12 to the discharge channel 18 to a gas seal part 54. A leak gas exhaust part 66 that recovers leak gas from a rod packing part 36 is connected to a suction channel 21 of the compression stage 12. However, the leak gas exhaust part 66 may be connected to a vent 70.

Therefore, the leaked hydrogen gas can be recovered. It is not necessary to separately prepare the hydrogen gas for a gas seal 54a.

Note that although other configurations, operations, and effects are not described, the description of the first embodiment can be applied to the second embodiment.

### (Third Embodiment)

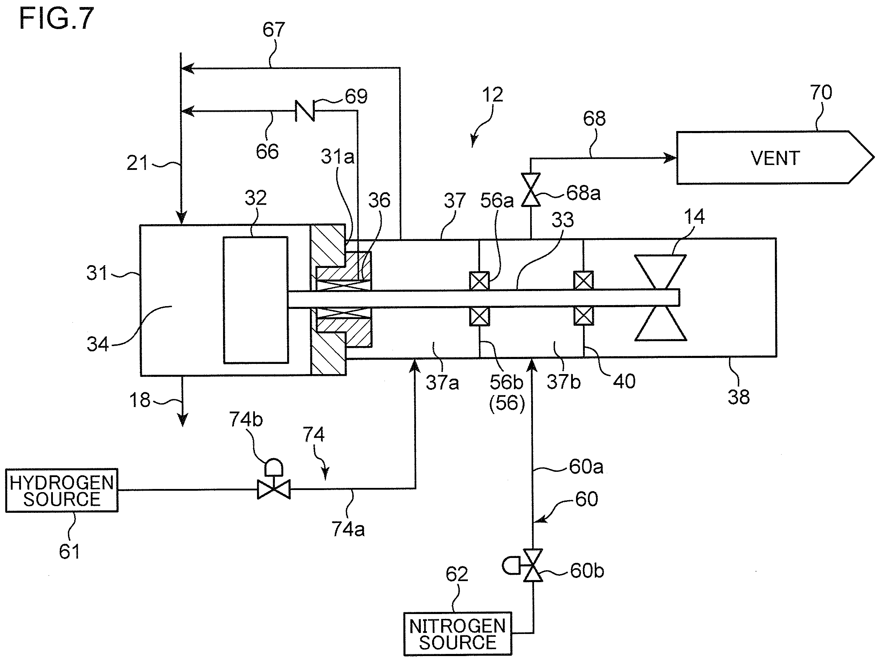

FIG. 7 shows the third embodiment. Note that here, the same components as components of the first embodiment are denoted with the same reference numerals, and detailed descriptions thereof will be omitted.

In the third embodiment, a first hydrogen gas supply part 58 that supplies hydrogen gas to a rod packing part 36 is omitted, and a gas seal part 54 is also omitted in the rod packing part 36. That is, the third embodiment includes a nitrogen gas supply part 60 that supplies nitrogen gas into an adapter part 37, a hydrogen gas supply part 74 that supplies hydrogen gas to other parts inside the adapter part 37, and a leak gas exhaust part 66 that exhausts the hydrogen gas that has leaked to the rod packing part 36 to the outside. The hydrogen gas supply part 74 supplies the hydrogen gas to the space located on the most compression chamber side inside the adapter part 37(first space 37a). The nitrogen gas supply part 60 supplies the nitrogen gas to at least one space (second space 37b) located closer to the crank mechanism than the first space 37a inside the adapter part 37. Note that FIG. 7 shows an example in which a partition part 56 includes a single partition member 56b, thereby forming the single second space 37b. Instead of this, the partition part 56 may include, for example, two partition members 56b, thereby forming two second spaces 37b. In this case, the nitrogen gas is supplied to each of the two second spaces 37b.

A hydrogen channel 74a of the hydrogen gas supply part 74 is provided with a hydrogen valve 74b, which is a valve that adjusts the pressure of the hydrogen gas flowing through the hydrogen channel 74a. The hydrogen valve 74b is adjusted such that the pressure of the hydrogen gas in the first space 37a is higher than the pressure of the hydrogen gas in the leak gas exhaust part 66. Even if the hydrogen gas in the compression chamber 34 leaks into the rod packing part 36, this adjustment prevents the hydrogen gas from intruding into the adapter part 37.

Therefore, in the third embodiment, the pressure of the hydrogen gas in the first space 37a inside the adapter part 37 supplied by the hydrogen gas supply part 74 is higher than the pressure of the hydrogen gas in the leak gas exhaust part 66. This prevents the hydrogen gas that has leaked into the rod packing part 36 from intruding into the space on the most compression chamber side in the adapter part 37 (first space 37a). This prevents the boil-off gas of the liquefied hydrogen, which is a low-temperature gas, from coming into direct contact with the nitrogen gas, thereby preventing the liquefaction of the nitrogen gas.

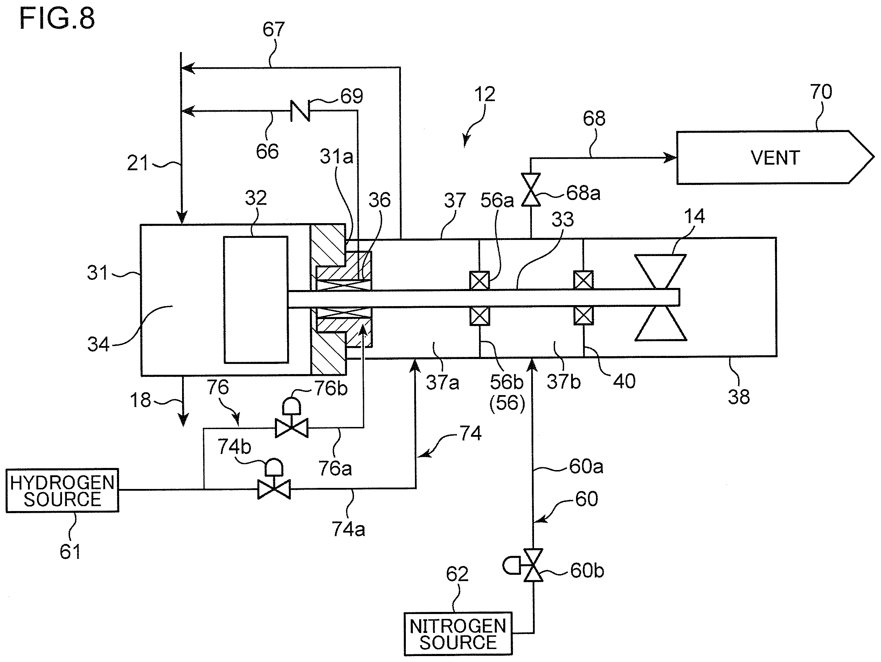

Note that in the third embodiment, as shown in FIG. 8, a compression stage 12 may include a different hydrogen gas supply part 76 that supplies the hydrogen gas to the rod packing part 36. This different hydrogen gas supply part 76 includes a different channel 76a connected to the rod packing part 36. The different channel 76a may be connected to the gas seal part 54 of the rod packing part 36. The hydrogen gas supplied through the different channel 76a forms a gas seal 54a in a gap 50 between the outer peripheral surface of a piston rod 33 and a third case part 46, closer to a crank mechanism 14 than an exhaust passage 52.

The different channel 76a is provided with a different valve 76b including a valve having an adjustable opening. The different valve 76b is adjusted such that the pressure of the hydrogen gas in the gas seal part 54 is higher than the pressure of the hydrogen gas in the leak gas exhaust part 66. That is, the pressure of the gas seal 54a formed by the gas seal part 54 becomes higher than the pressure in the exhaust passage 52 located closer to the compression chamber 34 than the gas seal 54a. Therefore, even if the hydrogen gas leaks from the compression chamber 34 and then passes through a first packing ring part 41, the hydrogen gas can be prevented from passing through the gas seal 54a.

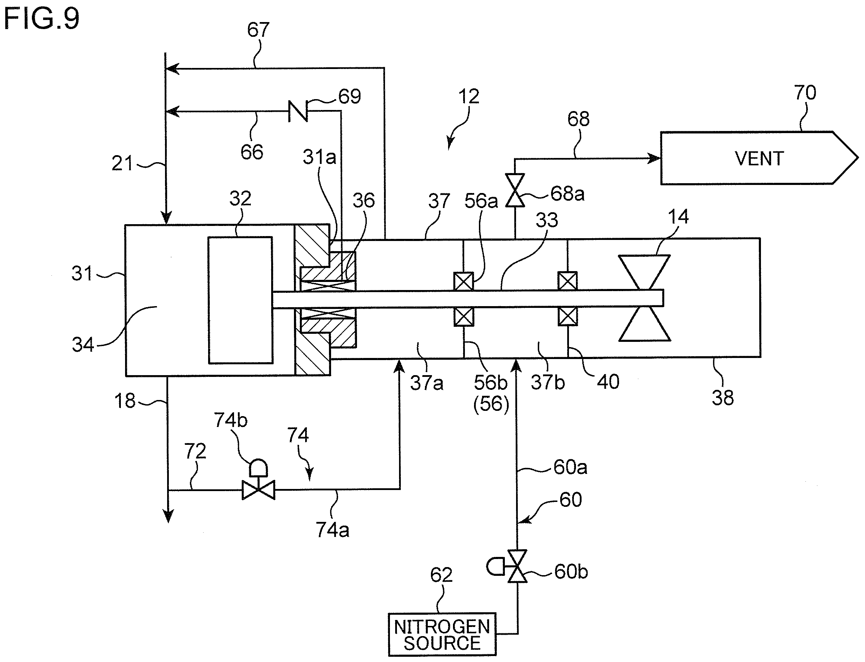

In the third embodiment, as shown in FIG. 9, a feed line 72 may be provided to connect the hydrogen channel 74a of the hydrogen gas supply part 74 and a discharge channel 18 to each other. The feed line 72 can send part of the hydrogen gas discharged from the compression stage 12 to the discharge channel 18 to the gas seal part 54.

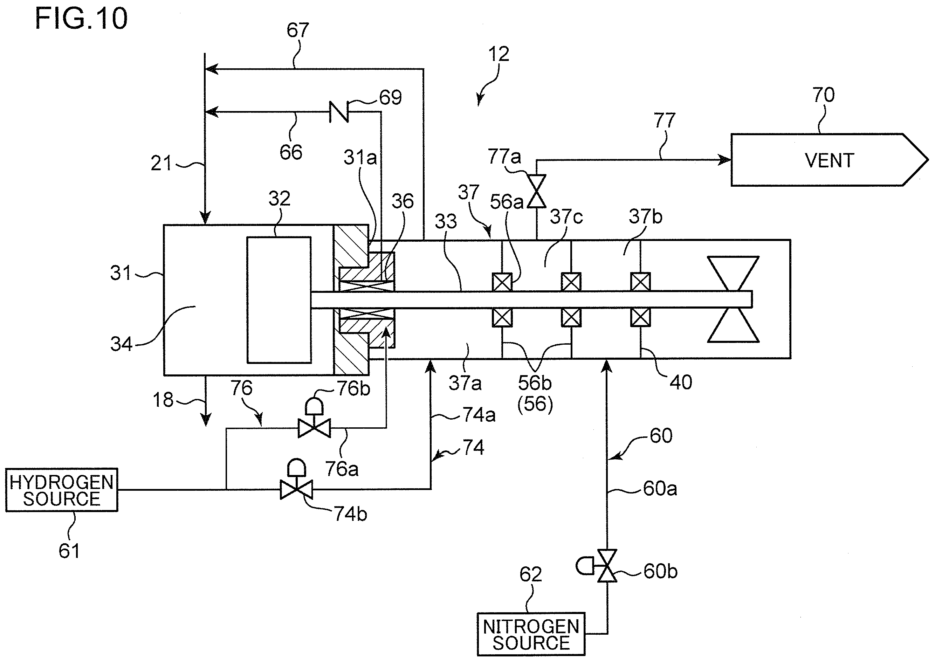

As shown in FIG. 10, the space inside the adapter part 37 may be partitioned by two partition members 56b into three spaces. That is, the partition part 56 may be configured by the two partition members 56b. The hydrogen gas supply part 74 supplies hydrogen gas to the space (first space 37a) located on the most compression chamber 34 side inside the adapter part 37. The hydrogen gas supply part 74 is provided with the hydrogen valve 74b including a valve having an adjustable opening.

In addition, in the form shown in FIG. 10, the different hydrogen gas supply part 76 is provided to supply the hydrogen gas to the rod packing part 36. The different hydrogen gas supply part 76 is provided with a different valve 76b including a valve having an adjustable opening.

The nitrogen gas supply part 60 supplies nitrogen gas to the space (second space 37b) located on the most crank mechanism 14 side inside the adapter part 37. The nitrogen gas supply part 60 is provided with a nitrogen valve 60b including a valve having an adjustable opening. In an intermediate chamber 37c between the first space 37a and the second space 37b, a vent exhaust part 77 that exhausts the gas inside the intermediate chamber 37c to the outside is provided. The vent exhaust part 77 is provided with a valve 77a that opens when the pressure in the intermediate chamber 37c exceeds predetermined pressure.

At least one of the hydrogen valve 74b and the nitrogen valve 60b is adjusted such that the pressure of the hydrogen gas in the first space 37a and the pressure of the nitrogen gas in the second space 37b are higher than the pressure in the intermediate chamber 37c. Therefore, even if the nitrogen gas flows into the intermediate chamber 37c, the nitrogen gas can be prevented from intruding into the first space 37a.

In the third embodiment, even if the nitrogen gas leaks from the space located on the most crank mechanism side into the intermediate chamber 37c, the nitrogen gas becomes less likely to be transmitted to the space on the most compression chamber side. Therefore, it is possible to more reliably prevent the mixing of nitrogen into a cylinder part 31.

Note that, although other configurations, operations, and effects are not described, the description of the first to second embodiments can be applied to the third embodiment.

It should be understood that the embodiments disclosed this time are illustrative in all respects and are not restrictive. The present invention is not limited to the above embodiments, and various modifications, improvements, and the like can be made without departing from the gist of the present invention.

Here, the above embodiments will be outlined.
(1) A compressor unit according to the present embodiment is a reciprocating compressor unit for recovering a hydrogen gas that is a boil-off gas through a suction channel from a liquid hydrogen storage tank and supplying at least part of the recovered hydrogen gas to a demand destination including at least one of an engine, a power generation facility, or a boiler, and the compressor unit includes: a compression stage that compresses the hydrogen gas in the suction channel; and a crank mechanism that drives the compression stage. The compression stage includes: a cylinder part; a piston; a piston rod that connects the piston to the crank mechanism; a rod packing part that seals between the piston rod and the cylinder part; an adapter part that connects the cylinder part to a case of the crank mechanism; a nitrogen gas supply part that supplies a nitrogen gas into the adapter part; a leak gas exhaust part that exhausts the hydrogen gas that has leaked to the rod packing part to outside; and a hydrogen gas supply part that supplies the hydrogen gas to the rod packing part. The rod packing part includes: at least one packing ring part that comes into contact with the piston rod and seals between the piston rod and the cylinder part; an exhaust passage that is connected to the leak gas exhaust part and allows the hydrogen gas that is part of the gas compressed in the cylinder part and has leaked through the packing ring part to flow into the leak gas exhaust part; a gas seal part that forms a gas seal in a gap between the piston rod and the rod packing part by the hydrogen gas supplied from the hydrogen gas supply part at a position closer to the crank mechanism than the exhaust passage; and at least one other packing ring part that is disposed between the gas seal part and the exhaust passage. Pressure of the hydrogen gas in the gas seal part is higher than pressure of the hydrogen gas in the leak gas exhaust part.

In the compressor unit, the rod packing part is provided with the exhaust passage, and the exhaust passage is connected to the leak gas exhaust part. Therefore, the hydrogen gas that has leaked through the packing ring part is exhausted to the outside through the exhaust passage and the leak gas exhaust part. The rod packing part is provided with the gas seal part using the hydrogen gas, closer to the crankcase than the exhaust passage, and the pressure of the hydrogen gas in the gas seal part is higher than the pressure in the leak gas exhaust part. This prevents the boil-off gas (suction gas) of the liquefied hydrogen, which is a low-temperature gas compressed in the cylinder part, from intruding beyond the gas seal part into the adapter part side and the crankcase side, thereby preventing the liquefaction of nitrogen gas.

In the gas seal of the rod packing part, the hydrogen gas is used. Therefore, even if the seal gas leaks into the cylinder part, unexpected situations, such as liquefaction or the like that occurs when cooled by the suction gas (hydrogen gas) can be prevented, better than when a different type of gas is used as the seal gas.

(2) In the compressor unit, the pressure of the hydrogen gas in the gas seal part may be higher than pressure of the nitrogen gas in the adapter part.

In this aspect, the pressure of hydrogen gas in the gas seal part provided in the rod packing part is higher than the pressure of nitrogen gas in the adapter part. Therefore, the nitrogen gas supplied to the adapter part can be prevented from getting over the gas seal part provided in the rod packing part. Therefore, the leak gas of the boil-off gas (suction gas) of the liquefied hydrogen, which is a low-temperature gas compressed in the cylinder part, is more reliably prevented from coming into direct contact with the nitrogen gas.

(3) The compression stage may further include another hydrogen gas supply part capable of supplying the hydrogen gas. In this case, the adapter part may include a partition part that partitions an interior of the adapter part into a space on a compression chamber side and a space on a crank mechanism side. The another hydrogen gas supply part may be configured to supply the hydrogen gas to the space on the compression chamber side, and the nitrogen gas supply part may be configured to supply the nitrogen gas to the space on the crank mechanism side. A temperature of the hydrogen gas in the space on the compression chamber side may be higher than a liquefaction temperature of the nitrogen gas in the space on the crank mechanism side.

In this aspect, the adapter part includes the partition part, which can more reliably prevent contact between the low-temperature boil-off gas (suction gas) and the nitrogen gas. The temperature of the hydrogen gas in the space on the compression chamber side supplied by the another hydrogen gas supply part is higher than the liquefaction temperature of the nitrogen gas in the space on the crank mechanism side, thereby preventing the liquefaction of the nitrogen gas.

(4) The compression stage may further include a pressure adjusting means that adjusts gas pressure by at least one of the hydrogen gas supply part, the another hydrogen gas supply part, and the nitrogen gas supply part to establish a relationship of pressure P1 > pressure P2 > pressure P3 among the pressure P1 of the hydrogen gas in the gas seal part, the pressure P2 of the hydrogen gas in the space on the compression chamber side of the adapter part, and the pressure P3 of the nitrogen gas in the space on the crank mechanism side.

In this aspect, since the nitrogen gas does not flow from the space on the crank mechanism side into the space on the compression chamber side, the nitrogen gas does not flow into the rod packing part. Therefore, the liquefaction of the nitrogen gas can be prevented.

(5) The adapter part may further include: a supply port and an exhaust port for the nitrogen gas disposed on an outer peripheral wall that forms the space on the crank mechanism side; and a release side pressure adjusting means that allows the nitrogen gas to be released when pressure at the exhaust port becomes equal to or higher than predetermined pressure. In this case, the compression stage may further include a supply side pressure adjusting means that adjusts gas pressure by at least one of the hydrogen gas supply part, the another hydrogen gas supply part, and the nitrogen gas supply part to establish a relationship of pressure P1 > pressure P3 > pressure P2 among the pressure P1 of the hydrogen gas in the gas seal part, the pressure P2 of the hydrogen gas in the space on the compression chamber side of the adapter part, and the pressure P3 in the space on the crank mechanism side.

In this aspect, it is possible to more actively prevent the leakage of the hydrogen gas, which is a flammable gas, to the crankcase side.

(6) The leak gas exhaust part may be connected to the suction channel and configured to return the leaked hydrogen gas to the suction channel. In this case, the compression stage may further include a feed line that connects the hydrogen gas supply part to a discharge channel and sends part of the hydrogen gas discharged from the compression stage and flowing through the discharge channel to the gas seal part.

In this aspect, the leaked hydrogen gas can be recovered. It is not necessary to separately prepare the hydrogen gas for the gas seal.

(7) A compressor unit according to the present embodiment is a reciprocating compressor unit for recovering a hydrogen gas that is a boil-off gas through a suction channel from a liquid hydrogen storage tank and supplying at least part of the recovered hydrogen gas to a demand destination including at least one of an engine, a power generation facility, or a boiler, and the compressor unit includes: a compression stage that compresses the hydrogen gas in the suction channel; and a crank mechanism that drives the compression stage. The compression stage includes: a cylinder part; a piston; a piston rod that connects the piston to the crank mechanism; a rod packing part that seals between the piston rod and the cylinder part; an adapter part that connects the cylinder part to a case of the crank mechanism; a nitrogen gas supply part that supplies a nitrogen gas into the adapter part; a hydrogen gas supply part that supplies the hydrogen gas to another part in the adapter part; and a leak gas exhaust part that exhausts the hydrogen gas that has leaked to the rod packing part to outside. The rod packing part includes: at least one packing ring part that comes into contact with the piston rod and seals between the piston rod and the cylinder part; an exhaust passage that is connected to the leak gas exhaust part and allows the hydrogen gas that is part of the gas compressed in the cylinder part and has leaked through the packing ring part to flow into the leak gas exhaust part; and at least one other packing ring part disposed closer to the crank mechanism than the exhaust passage. The adapter part includes a partition part that partitions an interior of the adapter part into a plurality of spaces. The hydrogen gas supply part is configured to supply the hydrogen gas to a space located on a most compression chamber side in the interior of the adapter part. The nitrogen gas supply part is configured to supply the nitrogen gas to at least one space located closer to the crank mechanism than the space located on the most compression chamber side in the interior of the adapter part. Pressure of the hydrogen gas in the space on the most compression chamber side is higher than pressure of the hydrogen gas in the leak gas exhaust part.

In the compressor unit, the hydrogen gas is supplied by the hydrogen gas supply part to the space located on the most compression chamber side in the adapter part. The pressure of the hydrogen gas in the space located on the most compression chamber side is higher than the pressure of the hydrogen gas in the leak gas exhaust part. This prevents the hydrogen gas that has leaked into the rod packing part from intruding into the space on the most compression chamber side in the adapter part. This prevents the boil-off gas of the liquefied hydrogen, which is a low-temperature gas, from coming into direct contact with the nitrogen gas, thereby preventing the liquefaction of the nitrogen gas.

(8) The compression stage may further include a different hydrogen gas supply part that supplies the hydrogen gas to the rod packing part. In this case, the rod packing part may further include a gas seal part that forms a gas seal in a gap between the piston rod and the rod packing part by the hydrogen gas supplied from the different hydrogen gas supply part to an area closer to the crank mechanism than the exhaust passage. A part of the at least one other packing ring part may be present between the gas seal part and the exhaust passage, and the pressure of the hydrogen gas in the gas seal part may be higher than the pressure of the hydrogen gas in the leak gas exhaust part.

In this aspect, the gas seal part can prevent the leak gas from inside the cylinder part.

(9) The partition part may include two partition members that partition the interior of the adapter part into three spaces. In this case, the hydrogen gas supply part may be configured to supply the hydrogen gas to the space located on the most compression chamber side in the interior of the adapter part, and the nitrogen gas supply part may be configured to supply the nitrogen gas to a space located on a most crank mechanism side in the interior of the adapter part. An intermediate chamber of the adapter part may be provided with a vent exhaust part that exhausts a gas in an interior of the intermediate chamber to outside. The pressure of the hydrogen gas in the space on the most compression chamber side and the pressure of the nitrogen gas in the space located on the most crank mechanism side may be set to be higher than pressure in the interior of the intermediate chamber.

In this aspect, even if the nitrogen gas leaks from the space located on the most crank mechanism side into the intermediate chamber, the nitrogen gas becomes less likely to be transmitted to the space on the most compression chamber side. Therefore, it is possible to more reliably prevent the mixing of nitrogen into the cylinder part.

(10) The leak gas exhaust part may be connected to the suction channel and configured to return the leaked hydrogen gas to the suction channel. In this case, the compression stage may further include a feed line that connects the different hydrogen gas supply part to a discharge channel and sends part of the hydrogen gas discharged from the compression stage and flowing through the discharge channel to the gas seal part.

In this aspect, the leaked hydrogen gas can be recovered. It is not necessary to separately prepare the hydrogen gas for the gas seal.

(11) Supply of the nitrogen gas to the interior of the adapter part by the nitrogen gas supply part may be performed not only during an operation of the compression stage but also during stop of the compression stage.

The cylinder part, the piston, and the piston rod, which are components of the compression stage, become low in temperature during operation, and even when the compressor unit stops, these components do not immediately return to room temperature, but instead remain in a low-temperature state for an extended period. Meanwhile, when the supply of the nitrogen gas is stopped, the atmosphere may intrude into the space on the crank mechanism side of the adapter part. If the atmosphere intrudes into the space on the crank mechanism side while the piston rod remains in a low-temperature state, there is a risk that condensation may occur on the piston rod. In that case, rusting of internal components and condensation that adheres to the surface of the piston rod can cause the packing ring to lose sealing functions. However, the nitrogen gas is supplied not only during the operation but also during stop of the compression stage, preventing rusting of the internal components and deterioration of the sealing functions.

As described above, the preferred sealing structure can be implemented for the reciprocating compressor unit that handles the boil-off gas of liquefied hydrogen.

## Claims

1. A reciprocating compressor unit (10) for recovering a hydrogen gas that is a boil-off gas through a suction channel (21) from a liquid hydrogen storage tank (23) and supplying at least part of the recovered hydrogen gas to a demand destination (20) including at least one of an engine, a power generation facility, or a boiler, the compressor unit (10) comprising:
a compression stage (12) that compresses the hydrogen gas in the suction channel (21); and
a crank mechanism (14) that drives the compression stage (12),
wherein the compression stage (12) includes:
a cylinder part (31);
a piston (32);
a piston rod (33) that connects the piston (32) to the crank mechanism (14);
a rod packing part (36) that seals between the piston rod (33) and the cylinder part (31);
an adapter part (37) that connects the cylinder part (31) to a case of the crank mechanism (14);
a nitrogen gas supply part (60) that supplies a nitrogen gas into the adapter part (37), **characterized in that**
a leak gas exhaust part (66) that exhausts the hydrogen gas that has leaked to the rod packing part (36) to outside; and
a hydrogen gas supply part (58) that supplies the hydrogen gas to the rod packing part (36),
the rod packing part (36) includes:
at least one packing ring part (41) that comes into contact with the piston rod (33) and seals between the piston rod (33) and the cylinder part (31);
an exhaust passage (52) that is connected to the leak gas exhaust part (66) and allows the hydrogen gas that is part of the gas compressed in the cylinder part (31) and has leaked through the packing ring part (41) to flow into the leak gas exhaust part (66);
a gas seal part (54) that forms a gas seal (54a) in a gap (50) between the piston rod (33) and the rod packing part (36) by the hydrogen gas supplied from the hydrogen gas supply part (58) at a position closer to the crank mechanism (14) than the exhaust passage (52); and
at least one other packing ring part (43) that is disposed between the gas seal part (54) and the exhaust passage (52), and
pressure of the hydrogen gas in the gas seal part (54) is higher than pressure of the hydrogen gas in the leak gas exhaust part (66).

2. The compressor unit (10) according to claim 1, wherein the pressure of the hydrogen gas in the gas seal part (54) is higher than pressure of the nitrogen gas in the adapter part (37).

3. The compressor unit (10) according to claim 1 or 2, wherein
the compression stage (12) further includes another hydrogen gas supply part (59) capable of supplying the hydrogen gas,
the adapter part (37) includes a partition part (56) that partitions an interior of the adapter part (37) into a space (37a) on a compression chamber (34) side and a space (37b) on a crank mechanism (14) side,
the another hydrogen gas supply part (59) is configured to supply the hydrogen gas to the space (37a) on the compression chamber (34) side,
the nitrogen gas supply part (60) is configured to supply the nitrogen gas to the space (37b) on the crank mechanism (14) side, and
a temperature of the hydrogen gas in the space (37a) on the compression chamber (34) side is higher than a liquefaction temperature of the nitrogen gas in the space (37b) on the crank mechanism (14) side.

4. The compressor unit (10) according to claim 3, wherein
the compression stage (12) further includes a pressure adjusting means (63) that adjusts gas pressure by at least one of the hydrogen gas supply part (58), the another hydrogen gas supply part (59), and the nitrogen gas supply part (60) to establish a relationship of pressure P1 > pressure P2 > pressure P3 among the pressure P1 of the hydrogen gas in the gas seal part (54), the pressure P2 of the hydrogen gas in the space (37a) on the compression chamber (34) side of the adapter part (37), and the pressure P3 of the nitrogen gas in the space (37b) on the crank mechanism (14) side.

5. The compressor unit (10) according to claim 3, wherein
the adapter part (37) further includes:
a supply port and an exhaust port for the nitrogen gas disposed on an outer peripheral wall that forms the space (37b) on the crank mechanism (14) side; and
a release side pressure adjusting means (68a) that allows the nitrogen gas to be released when pressure at the exhaust port becomes equal to or higher than predetermined pressure, and
the compression stage (12) further includes a supply side pressure adjusting means (58b, 59b, 60b) that adjusts gas pressure by at least one of the hydrogen gas supply part (58), the another hydrogen gas supply part (59), and the nitrogen gas supply part (60) to establish a relationship of pressure P1 > pressure P3 > pressure P2 among the pressure P1 of the hydrogen gas in the gas seal part (54), the pressure P2 of the hydrogen gas in the space (37a) on the compression chamber (34) side of the adapter part (37), and the pressure P3 in the space (37b) on the crank mechanism (14) side.

6. The compressor unit (10) according to claim 1, wherein
the leak gas exhaust part (66) is connected to the suction channel (21) and configured to return the leaked hydrogen gas to the suction channel (21), and
the compression stage (12) further includes a feed line (72) that connects the hydrogen gas supply part (58) to a discharge channel (18) and sends part of the hydrogen gas discharged from the compression stage (12) and flowing through the discharge channel (18) to the gas seal part (54).

7. A reciprocating compressor unit (10) for recovering a hydrogen gas that is a boil-off gas through a suction channel (21) from a liquid hydrogen storage tank (23) and supplying at least part of the recovered hydrogen gas to a demand destination (20) including at least one of an engine, a power generation facility, or a boiler, the compressor unit comprising:
a compression stage (12) that compresses the hydrogen gas in the suction channel (21); and
a crank mechanism (14) that drives the compression stage (12),
wherein the compression stage (12) includes:
a cylinder part (31);
a piston (32);
a piston rod (33) that connects the piston (32) to the crank mechanism (14);
a rod packing part (36) that seals between the piston rod (33) and the cylinder part (31);
an adapter part (37) that connects the cylinder part (31) to a case of the crank mechanism (14);
a nitrogen gas supply part (60) that supplies a nitrogen gas into the adapter part (37);
a hydrogen gas supply part (74) that supplies the hydrogen gas to another part in the adapter part (37), **characterized in that** it further comprises
a leak gas exhaust part (66) that exhausts the hydrogen gas that has leaked to the rod packing part (36) to outside,
wherein the rod packing part (36) includes:
at least one packing ring part (41) that comes into contact with the piston rod (33) and seals between the piston rod (33) and the cylinder part (31);
an exhaust passage (52) that is connected to the leak gas exhaust part (66) and allows the hydrogen gas that is part of the gas compressed in the cylinder part (31) and has leaked through the packing ring part (41) to flow into the leak gas exhaust part (66); and
at least one other packing ring part (43) disposed closer to the crank mechanism (14) than the exhaust passage (52),
the adapter part (37) includes a partition part (56) that partitions an interior of the adapter part (37) into a plurality of spaces (37a, 37b),
wherein the hydrogen gas supply part (74) is configured to supply the hydrogen gas to a space (37a) located on a most compression chamber (34) side in the interior of the adapter part (37),
the nitrogen gas supply part (60) is configured to supply the nitrogen gas to at least one space (37b) located closer to the crank mechanism (14) than the space (37a) located on the most compression chamber (34) side in the interior of the adapter part (37), and
pressure of the hydrogen gas in the space (37a) on the most compression chamber (34) side is higher than pressure of the hydrogen gas in the leak gas exhaust part (66).

8. The compressor unit (10) according to claim 7, wherein
the compression stage (12) further includes a different hydrogen gas supply part (76) that supplies the hydrogen gas to the rod packing part (36),
the rod packing part (36) further includes a gas seal part (54) that forms a gas seal (54a) in a gap (50) between the piston rod (33) and the rod packing part (36) by the hydrogen gas supplied from the different hydrogen gas supply part (76) to an area closer to the crank mechanism (14) than the exhaust passage (52),
a part of the at least one other packing ring part (43) is present between the gas seal part (54) and the exhaust passage (52), and
the pressure of the hydrogen gas in the gas seal part (54) is higher than the pressure of the hydrogen gas in the leak gas exhaust part (66).

9. The compressor unit (10) according to claim 7, wherein
the partition part (56) includes two partition members (56b) that partition the interior of the adapter part (37) into three spaces,
the hydrogen gas supply part (74) is configured to supply the hydrogen gas to the space (37a) located on the most compression chamber (34) side in the interior of the adapter part (37),
the nitrogen gas supply part (60) is configured to supply the nitrogen gas to a space (37b) located on a most crank mechanism (14) side in the interior of the adapter part (37),
an intermediate chamber (37c) of the adapter part (37) is provided with a vent exhaust part (77) that exhausts a gas in an interior of the intermediate chamber (37c) to outside, and
the pressure of the hydrogen gas in the space (37a) on the most compression chamber (34) side and the pressure of the nitrogen gas in the space (37b) located on the most crank mechanism (14) side are set to be higher than pressure in the interior of the intermediate chamber (37c).

10. The compressor unit (10) according to claim 8, wherein
the leak gas exhaust part (66) is connected to the suction channel (21) and configured to return the leaked hydrogen gas to the suction channel (21), and
the compression stage (12) further includes a feed line (72) that connects the different hydrogen gas supply part (76) to a discharge channel (18) and sends part of the hydrogen gas discharged from the compression stage (12) and flowing through the discharge channel (18) to the gas seal part (54).

11. A method for operating the compressor unit (10) according to claim 1 or 7, the method comprising performing supply of the nitrogen gas to the interior of the adapter part (37) by the nitrogen gas supply part (60) not only during an operation of the compression stage (12) but also during stop of the compression stage (12).

## Patentansprüche

1. Hubkolbenverdichtereinheit (10) zum Rückgewinnen eines Wasserstoffgases, das ein durch einen Saugkanal (21) von einem Flüssigkeitswasserstoffspeichertank (23) austretendes Verdampfungsgas ist, und zum Zuführen von mindestens einem Teil des zurückgewonnenen Wasserstoffgases zu einem Bedarfsziel (20), das mindestens ein Element der aus einem Motor, einer Stromerzeugungsanlage oder einem Kessel bestehenden Gruppe umfasst, wobei die Verdichtereinheit (10) folgendes aufweist:
eine Verdichtungsstufe (12), die das Wasserstoffgas in dem Saugkanal (21) verdichtet; und
einen Kurbelmechanismus (14), der die Verdichtungsstufe (12) antreibt,
wobei die Verdichtungsstufe (12) folgendes umfasst:
ein Zylinderteil (31);
einen Kolben (32); und
eine Kolbenstange (33), die den Kolben (32) mit dem Kurbelmechanismus (14) verbindet;
ein Stangenpackungsteil (36), das zwischen der Kolbenstange (33) und dem Zylinderteil (31) abdichtet;
ein Adapterteil (37), das das Zylinderteil (31) mit einem Gehäuse des Kurbelmechanismus (14) verbindet;
ein Stickstoffgaszuführteil (60), das ein Stickstoffgas in das Adapterteil (37) zuführt, **gekennzeichnet durch**
ein Leckgasablassteil (66), das das zu dem Stangenpackungsteil (36) hindurchgetretene Wasserstoffgas nach außen ablässt; und
ein Wasserstoffgaszuführteil (58), das das Wasserstoffgas zu dem Stangenpackungsteil (36) zuführt,
wobei das Stangenpackungsteil (36) folgendes umfasst:
mindestens ein Packungsringteil (41), das mit der Kolbenstange (33) in Kontakt kommt und zwischen der Kolbenstange (33) und dem Zylinderteil (31) abdichtet;
ein Ablassdurchgang (52), der mit dem Leckgasablassteil (66) verbunden ist und dem Wasserstoffgas, das Teil des Gases ist, das in dem Zylinderteil (31) verdichtet ist und durch das Packungsringteil (41) hindurchgetreten ist, ermöglicht, in das Leckgasablassteil (66) zu strömen;
ein Gasdichtungsteil (54), das eine Gasdichtung (54a) in einem Spalt (50) zwischen der Kolbenstange (33) und dem Stangenpackungsteil (36) durch das Wasserstoffgas bildet, das von dem Wasserstoffzuführteil (58) an einer Stelle zugeführt wird, die näher zu dem Kurbelmechanismus (14) als der Ablassdurchgang (52) ist; und
mindestens ein anderes Packungsringteil (43), das zwischen dem Gasdichtungsteil (54) und dem Ablassdurchgang (52) angeordnet ist, und
wobei Druck des Wasserstoffgases in dem Gasdichtungsteil (54) höher als Druck des Wasserstoffgases in dem Leckgasablassteil (66) ist.

2. Verdichtereinheit (10) nach Anspruch 1, wobei der Druck des Wasserstoffgases in dem Gasdichtungsteil (54) höher ist als Druck des Stickstoffgases in dem Adapterteil (37).

3. Verdichtereinheit (10) nach Anspruch 1 oder 2, wobei
die Verdichtungsstufe (12) ferner ein anderes Wasserstoffgaszuführteil (59) umfasst, das in der Lage ist Wasserstoffgas zuzuführen,
wobei das Adapterteil (37) ein Trennteil (56) umfasst, das ein Inneres des Adapterteils (37) in einen Raum (37a) an einer Seite einer Verdichtungskammer (34) und einen Raum (37b) an einer Seite des Kurbelmechanismus (14) trennt,
wobei das andere Wasserstoffgaszuführteil (59) konfiguriert ist, das Wasserstoffgas zu dem Raum (37a) an der Seite der Verdichtungskammer (34) zuzuführen,
wobei das Stickstoffgaszuführteil (60) konfiguriert ist, das Stickstoffgas zu dem Raum (37b) an der Seite des Kurbelmechanismus (14) zuzuführen, und
eine Temperatur des Wasserstoffgases in dem Raum (37a) an der Seite der Verdichtungskammer (34) höher ist als eine Verflüssigungstemperatur des Stickstoffgases in dem Raum (37b) an der Seite des Kurbelmechanismus (14).

4. Verdichtereinheit (10) nach Anspruch 3, wobei
die Verdichtungsstufe (12) ferner ein Druckanpassungsmittel (63) umfasst, das Gasdruck durch mindestens ein Element der aus dem Wasserstoffgaszuführteil (58), dem anderen Wasserstoffgaszuführteil (59) und dem Stickstoffgaszuführteil (60) bestehenden Gruppe anpasst, um ein Verhältnis von Druck P1 > Druck P2 > Druck P3 aus der Gruppe des Drucks P1 des Wasserstoffgases in dem Gasdichtungsteil (54), des Drucks P2 des Wasserstoffgases in dem Raum (37a) an der Seite der Verdichtungskammer (34) des Adapterteils (37), und des Drucks P3 des Stickstoffgases in dem Raum (37b) an der Seite des Kurbelmechanismus (14) einzurichten.

5. Verdichtereinheit (10) nach Anspruch 3, wobei
das Adapterteil (37) ferner folgendes umfasst:
einen Zuführanschluss und einen Ablassanschluss für das Stickstoffgas, die an einer äußeren Umfangswand angeordnet sind, die den Raum (37b) an der Seite des Kurbelmechanismus (14) bildet; und
ein Freigabeseitendruckanpassungsmittel (68a), das dem Stickstoffgas ermöglicht, freigelassen zu werden, wenn Druck an dem Ablassanschluss gleich oder höher als ein vorbestimmter Druck ist, und
die Verdichtungsstufe (12) ferner ein Zuführseitendruckanpassungsmittel (58b, 59b, 60b) umfasst, das Gasdruck durch mindestens eines von dem Wasserstoffgaszuführteil (58), dem anderen Wasserstoffgaszuführteil (59), und dem Stickstoffgaszuführteil (60) anpasst, um ein Verhältnis von Druck P1 > Druck P2 > Druck P3 aus der Gruppe des Drucks P1 des Wasserstoffgases in dem Gasdichtungsteil (54), des Drucks P2 des Wasserstoffgases in dem Raum (37a) an der Seite der Verdichtungskammer (34) des Adapterteils (37), und des Drucks P3 des Stickstoffgases in dem Raum (37b) an der Seite des Kurbelmechanismus (14) einzurichten.

6. Verdichtereinheit (10) nach Anspruch 1, wobei
das Leckgasablassteil (66) mit dem Saugkanal (21) verbunden ist und konfiguriert ist, das ausgetretene Wasserstoffgas zu dem Saugkanal (21) zurückzuführen, und
die Verdichtungsstufe (12) ferner eine Versorgungsleitung (72) umfasst, die das Wasserstoffgaszuführteil (58) mit einem Abführkanal (18) verbindet und einen Teil des Wasserstoffgases, das von der Verdichtungsstufe (12) abgeführt wurde und durch den Abführkanal (18) strömt, zu dem Gasdichtungsteil (54) abgeführt.

7. Hubkolbenverdichtereinheit (10) zum Rückgewinnen eines Wasserstoffgases, das ein durch einen Saugkanal (21) von einem Flüssigkeitswasserstoffspeichertank (23) austretendes Verdampfungsgas ist, und zum Zuführen von mindestens einem Teil des zurückgewonnenen Wasserstoffgases zu einem Bedarfsziel (20), das mindestens ein Element der aus einem Motor, einer Stromerzeugungsanlage oder einem Kessel bestehenden Gruppe umfasst, wobei die Verdichtereinheit folgendes aufweist:
eine Verdichtungsstufe (12), die das Wasserstoffgas in dem Saugkanal (21) verdichtet; und
einen Kurbelmechanismus (14), der die Verdichtungsstufe (12) antreibt,
wobei die Verdichtungsstufe (12) folgendes umfasst:
ein Zylinderteil (31);
einen Kolben (32); und
eine Kolbenstange (33), die den Kolben (32) mit dem Kurbelmechanismus (14) verbindet;
ein Stangenpackungsteil (36), das zwischen der Kolbenstange (33) und dem Zylinderteil (31) abdichtet;
ein Adapterteil (37), das das Zylinderteil (31) mit einem Gehäuse des Kurbelmechanismus (14) verbindet;
ein Stickstoffgaszuführteil (60), das ein Stickstoffgas in das Adapterteil (37) zuführt,
ein Wasserstoffgaszuführteil (74), das das Wasserstoffgas zu einem anderen Teil in dem Adapterteil (37) zuführt, **dadurch gekennzeichnet, dass** sie ferner folgendes aufweist
ein Leckgasablassteil (66), das das zu dem Stangenpackungsteil (36) hindurchgetretene Wasserstoffgas nach außen ablässt,
wobei das Stangenpackungsteil (36) folgendes umfasst:
mindestens ein Packungsringteil (41), das mit der Kolbenstange (33) in Kontakt kommt und zwischen der Kolbenstange (33) und dem Zylinderteil (31) abdichtet;
ein Ablassdurchgang (52), der mit dem Leckgasablassteil (66) verbunden ist und dem Wasserstoffgas, das Teil des Gases ist, das in dem Zylinderteil (31) verdichtet ist und durch das Packungsringteil (41) hindurchgetreten ist, ermöglicht, in das Leckgasablassteil (66) zu strömen; und
mindestens ein anderes Packungsringteil (43), das näher an dem Kurbelmechanismus (14) als der Ablassdurchgang (52) angeordnet ist,
wobei das Adapterteil (37) ein Trennteil (56) umfasst, das ein Inneres des Adapterteils (37) in eine Vielzahl Räume (37a, 37b) trennt, wobei
das Wasserstoffgaszuführteil (74) konfiguriert ist, das Wasserstoffgas zu einem Raum (37a) zuzuführen, der sich an einer nächstgelegenen Seite der Verdichtungskammer (34) in dem Inneren des Adapterteils (37) befindet,
das Stickstoffgaszuführteil (60) konfiguriert ist, das Stickstoffgas zu mindestens einem Raum (37b) zuzuführen, der sich näher an dem Kurbelmechanismus (14) als der Raum (37a) befindet, der sich an der nächstgelegenen Seite der Verdichtungskammer (34) in dem Inneren des Adapterteils (37) befindet, und
Druck des Wasserstoffgases in dem Raum (37a) an der nächstgelegenen Seite der Verdichtungskammer (34) ist höher als Druck des Wasserstoffgases in dem Leckgasablassteil (66).

8. Verdichtereinheit (10) nach Anspruch 7, wobei
die Verdichtungsstufe (12) ferner ein weiteres Wasserstoffgaszuführteil (76) umfasst, das das Wasserstoffgas zu dem Stangenverdichtungsteil (36) zuführt,
das Stangenpackungsteil (36) ferner ein Gasdichtungsteil (54) umfasst, das eine Gasdichtung (54a) in einem Spalt (50) zwischen der Kolbenstange (33) und dem Stangenpackungsteil (36) durch das Wasserstoffgas bildet, das von dem weiteren Wasserstoffgaszuführteil (76) zu einem Bereich zugeführt wird, der näher an dem Kurbelmechanismus (14) als der Ablassdurchgang (52) ist,
ein Teil des mindestens einen anderen Packungsringteils (43) zwischen dem Gasdichtungsteil (54) und dem Ablassdurchgang (52) vorhanden ist, und
der Druck des Wasserstoffgases in dem Gasdichtungsteil (54) höher als der Druck des Wasserstoffgases in dem Leckgasablassteil (66) ist.

9. Verdichtereinheit (10) nach Anspruch 7, wobei
das Trennteil (56) zwei Trennelemente (56b) umfasst, die das Innere des Adapterteils (37) in drei Räume trennen,
das Wasserstoffgaszuführteil (74) konfiguriert ist, das Wasserstoffgas zu dem Raum (37a) zuzuführen, der sich an der nächstgelegenen Seite der Verdichtungskammer (34) in dem Inneren des Adapterteils (37) befindet,
das Stickstoffgaszuführteil (60) konfiguriert ist, das Stickstoffgas zu einem Raum (37b) zuzuführen, der sich an einer nächstgelegenen Seite des Kurbelmechanismus (14) in dem Inneren des Adapterteils (37) befindet,
eine Zwischenkammer (37c) des Adapterteils (37) mit einem Entlüftungsablassteil (77) versehen ist, das ein Gas in einem Inneren der Zwischenkammer (37c) nach außen ablässt, und
der Druck des Wasserstoffgases in dem Raum (37a) an der nächstgelegenen Seite der Verdichtungskammer (34) und der Druck des Stickstoffgases in dem Raum (37b), der sich an der nächstgelegenen Seite des Kurbelmechanismus (14) befindet, eingestellt sind, höher als Druck in dem Inneren der Zwischenkammer (37c) zu sein.

10. Verdichtereinheit (10) nach Anspruch 8, wobei
das Leckgasablassteil (66) mit dem Saugkanal (21) verbunden ist und konfiguriert ist, das ausgetretene Wasserstoffgas zu dem Saugkanal (21) zurückzuführen, und
die Verdichtungsstufe (12) ferner eine Versorgungsleitung (72) umfasst, die das weitere Wasserstoffgaszuführteil (76) mit einem Abführkanal (18) verbindet und einen Teil des Wasserstoffgases, das von der Verdichtungsstufe (12) abgeführt wurde und durch den Abführkanal (18) strömt, zu dem Gasdichtungsteil (54) zuführt.

11. Verfahren zum Betreiben der Verdichtungseinheit (10) nach Anspruch 1 oder 7, wobei das Verfahren folgendes aufweist
Ausführen der Zufuhr des Stickstoffgases zu dem Inneren des Adapterteils (37) durch das Stickstoffgaszuführteil (60) nicht nur während eines Betriebs der Verdichtungsstufe (12), sondern auch während Stillstands der Verdichtungsstufe (12).

## Revendications

1. Unité de compresseur alternatif (10) pour récupérer un gaz d'hydrogène qui est un gaz d'évaporation à travers un canal d'aspiration (21) à partir d'un réservoir de stockage d'hydrogène liquide (23) et fournir au moins une partie du gaz d'hydrogène récupéré à une destination de demande (20) comportant au moins l'un parmi un moteur, une installation de production d'énergie, ou une chaudière, l'unité de compresseur (10) comprenant :
un étage de compression (12) qui comprime le gaz d'hydrogène dans le canal d'aspiration (21) ; et
un mécanisme à manivelle (14) qui entraîne l'étage de compression (12),
dans laquelle l'étage de compression (12) comprend :
une partie cylindre (31) ;
un piston (32);
une tige de piston (33) qui relie le piston (32) au mécanisme à manivelle (14),
une partie garniture de tige (36) qui assure l'étanchéité entre la tige de piston (33) et la partie cylindre (31);
une partie adaptateur (37) qui relie la partie cylindre (31) à un carter du mécanisme à manivelle (14) ;
une partie alimentation de gaz d'azote (60) qui fournit un gaz d'azote dans la partie adaptateur (37), **caractérisée en ce que**
une partie échappement de gaz de fuite (66) qui évacue le gaz d'hydrogène qui a fui vers la partie garniture de tige (36) vers l'extérieur ; et
une partie alimentation de gaz d'hydrogène (58) qui fournit le gaz d'hydrogène à la partie garniture de tige (36),
la partie garniture de tige (36) comporte :
au moins une partie bague de garniture (41) qui vient en contact avec la tige de piston (33) et assurant l'étanchéité entre la tige de piston (33) et la partie cylindre (31);
un passage d'échappement (52) qui est relié à la partie échappement de gaz de fuite (66) et permet au gaz d'hydrogène qui fait partie du gaz comprimé dans la partie cylindre (31) et a fui à travers la partie bague de garniture (41) de s'écouler dans la partie échappement de gaz de fuite (66);
une partie étanche aux gaz (54) qui forme un joint d'étanchéité aux gaz (54a) dans un espace (50) entre la tige de piston (33) et la partie garniture de tige (36) par le gaz d'hydrogène fourni par la partie alimentation de gaz d'hydrogène (58) au niveau d'une position plus proche du mécanisme à manivelle (14) que le passage d'échappement (52) ; et
au moins une autre partie bague de garniture (43) qui est disposée entre la partie étanche aux gaz (54) et le passage d'échappement (52), et
la pression du gaz d'hydrogène dans la partie étanche aux gaz (54) est supérieure à la pression du gaz d'hydrogène dans la partie échappement de gaz de fuite (66).

2. Unité de compresseur (10) selon la revendication 1, dans laquelle la pression du gaz d'hydrogène dans la partie étanche aux gaz (54) est supérieure à la pression du gaz d'azote dans la partie adaptateur (37).

3. Unité de compresseur (10) selon la revendication 1 ou 2, dans lequel l'étage de compression (12) comporte en outre une autre partie alimentation de gaz d'hydrogène (59) capable de fournir le gaz d'hydrogène,
la partie adaptateur (37) comprend une partie séparation (56) qui sépare un intérieur de la partie adaptateur (37) en un espace (37a) d'un côté de chambre de compression (34) et un espace (37b) d'un côté du mécanisme à manivelle (14),
l'autre partie alimentation de gaz d'hydrogène (59) est configurée pour fournir le gaz d'hydrogène à l'espace (37a) du côté de la chambre de compression (34),
la partie alimentation de gaz d'azote (60) est configurée pour alimenter le gaz d'azote à l'espace (37b) du côté du mécanisme à manivelle (14), et
une température du gaz d'hydrogène dans l'espace (37a) du côté de la chambre de compression (34) est supérieure à une température de liquéfaction du gaz d'azote dans l'espace (37b) du côté du mécanisme à manivelle (14).

4. Unité de compresseur (10) selon la revendication 3, dans laquelle
l'étage de compression (12) comporte en outre un moyen d'ajustement de la pression (63) qui ajuste la pression du gaz par au moins l'une parmi la partie alimentation de gaz d'hydrogène (58), l'autre partie alimentation de gaz d'hydrogène (59), et la partie alimentation de gaz d'azote (60) pour établir une relation de pression P1 > pression P2 > pression P3 entre la pression P1 du gaz d'hydrogène dans la partie étanche aux gaz (54), la pression P2 du gaz d'hydrogène dans l'espace (37a) du côté de la chambre de compression (34) de la partie adaptateur (37), et la pression P3 du gaz d'azote dans l'espace (37b) du côté du mécanisme à manivelle (14).

5. Unité de compresseur (10) selon la revendication 3, dans laquelle
la partie adaptateur (37) comporte en outre :
un orifice d'alimentation et un orifice d'échappement pour le gaz d'azote disposés sur une paroi périphérique externe qui forme l'espace (37b) du côté du mécanisme à manivelle (14) ; et
un moyen d'ajustement de pression côté détente (68a) qui permet au gaz d'azote d'être libéré lorsque la pression au niveau de l'orifice d'échappement devient égale ou supérieure à une pression prédéterminée, et
l'étage de compression (12) comprend en outre un moyen d'ajustement de pression côté alimentation (58b, 59b, 60b) qui ajuste la pression de gaz par au moins l'une parmi la partie alimentation de gaz d'hydrogène (58), l'autre partie alimentation de gaz d'hydrogène (59), et la partie alimentation de gaz d'azote (60) pour établir une relation de pression P1 > pression P3 > pression P2 entre la pression P1 du gaz d'hydrogène dans la partie étanche aux gaz (54), la pression P2 du gaz d'hydrogène dans l'espace (37a) du côté de la chambre de compression (34) de la partie adaptateur (37) et la pression P3 dans l'espace (37b) du côté du mécanisme à manivelle (14).

6. Unité de compresseur (10) selon la revendication 1, dans laquelle
la partie échappement de gaz de fuite (66) est reliée au canal d'aspiration (21) et configurée pour renvoyer le gaz d'hydrogène qui a fui vers le canal d'aspiration (21), et
l'étage de compression (12) comprend en outre une conduite d'alimentation (72) qui relie la partie alimentation de gaz d'hydrogène (58) à un canal d'évacuation (18) et envoie une partie du gaz d'hydrogène évacué de l'étage de compression (12) et s'écoulant à travers le canal d'évacuation (18) vers la partie étanche aux gaz (54).

7. Unité de compresseur alternatif (10) pour récupérer un gaz d'hydrogène qui est un gaz d'évaporation à travers un canal d'aspiration (21) à partir d'un réservoir de stockage d'hydrogène liquide (23) et fournir au moins une partie du gaz d'hydrogène récupéré à une destination de demande (20) comportant au moins l'un parmi un moteur, une installation de production d'énergie, ou une chaudière, l'unité de compresseur comprenant :
un étage de compression (12) qui comprime le gaz d'hydrogène dans le canal d'aspiration (21) ; et
un mécanisme à manivelle (14) qui entraîne l'étage de compression (12),
dans laquelle l'étage de compression (12) comprend :
une partie cylindre (31) ;
un piston (32);
une tige de piston (33) qui relie le piston (32) au mécanisme à manivelle (14),
une partie garniture de tige (36) qui assure l'étanchéité entre la tige de piston (33) et la partie cylindre (31);
une partie adaptateur (37) qui relie la partie cylindre (31) à un carter du mécanisme à manivelle (14) ;
une partie alimentation de gaz d'azote (60) qui fournit un gaz d'azote dans la partie adaptateur (37) ;
une partie alimentation de gaz d'hydrogène (74) qui fournit le gaz d'hydrogène à une autre partie dans la partie adaptateur (37), **caractérisée en ce qu'**elle comprend en outre une partie échappement de gaz de fuite (66) qui évacue le gaz d'hydrogène qui a fui vers la partie garniture de tige (36) vers l'extérieur,
dans laquelle la partie garniture de tige (36) comporte :
au moins une partie bague de garniture (41) qui vient en contact avec la tige de piston (33) et assurant l'étanchéité entre la tige de piston (33) et la partie cylindre (31);
un passage d'échappement (52) qui est relié à la partie échappement de gaz de fuite (66) et permet au gaz d'hydrogène qui fait partie du gaz comprimé dans la partie cylindre (31) et qui a fui à travers la partie bague de garniture (41) de s'écouler dans la partie échappement de gaz de fuite (66) ; et
au moins une autre partie bague de garniture (43) disposée plus près du mécanisme à manivelle (14) que le passage d'échappement (52),
la partie adaptateur (37) comprend une partie séparation (56) qui divise un intérieur de la partie adaptateur (37) en une pluralité d'espaces (37a, 37b), dans laquelle
la partie alimentation de gaz d'hydrogène (74) est configurée pour fournir le gaz d'hydrogène à un espace (37a) situé sur un côté de la chambre de compression (34) à l'intérieur de la partie adaptateur (37),
la partie alimentation de gaz d'azote (60) est configurée pour alimenter le gaz d'azote à au moins un espace (37b) situé plus près du mécanisme à manivelle (14) que l'espace (37a) situé du côté de la chambre de compression la plus élevée (34) à l'intérieur de la partie adaptateur (37), et
la pression du gaz d'hydrogène dans l'espace (37a) du côté de la chambre de compression la plus élevée (34) est supérieure à la pression du gaz d'hydrogène dans la partie échappement de gaz de fuite (66).

8. Unité de compresseur (10) selon la revendication 7, dans laquelle
l'étage de compression (12) comprend en outre une partie alimentation de gaz d'hydrogène différente (76) qui fournit le gaz d'hydrogène à la partie garniture de tige (36),
la partie garniture de tige (36) comprend en outre une partie étanche aux gaz (54) qui forme un joint d'étanchéité aux gaz (54a) dans un espace (50) entre la tige de piston (33) et la partie garniture de tige (36) par le gaz d'hydrogène fourni par la partie alimentation de gaz d'hydrogène différente (76) vers une zone plus proche du mécanisme à manivelle (14) que le passage d'échappement (52),
une partie de l'au moins une partie bague de garniture (43) est présente entre la partie étanche aux gaz (54) et le passage d'échappement (52), et
la pression du gaz d'hydrogène dans la partie étanche aux gaz (54) est supérieure à la pression de gaz d'hydrogène dans la partie échappement de gaz de fuite (66).

9. Unité de compresseur (10) selon la revendication 7, dans laquelle
la partie séparation (56) comprend deux éléments de séparation (56b) qui divisent l'intérieur de la partie adaptateur (37) en trois espaces,
la partie alimentation de gaz d'hydrogène (74) est configurée pour fournir le gaz d'hydrogène à l'espace (37a) situé du côté de la chambre de compression la plus élevée (34) à l'intérieur de la partie adaptateur (37),
la partie alimentation de gaz d'azote (60) est configurée pour fournir le gaz d'azote à un espace (37b) situé sur un côté du mécanisme à manivelle le plus élevé (14) de la partie adaptateur (37),
une chambre intermédiaire (37c) de la partie adaptateur (37) est pourvue d'une partie échappement d'évent (77) qui évacue un gaz à l'intérieur de la chambre intermédiaire (37c) vers l'extérieur, et
la pression du gaz d'hydrogène dans l'espace (37a) du côté de la chambre de compression la plus élevée (34) et la pression du gaz d'azote dans l'espace (37b) situé du côté du mécanisme à manivelle le plus élevé (14) sont réglées pour être supérieures à la pression à l'intérieur de la chambre intermédiaire (37c).

10. Unité de compresseur (10) selon la revendication 8, dans laquelle
la partie échappement de gaz de fuite (66) est reliée au canal d'aspiration (21) et configurée pour renvoyer le gaz d'hydrogène qui a fui vers le canal d'aspiration (21), et
l'étage de compression (12) comprend en outre une conduite d'alimentation (72) qui relie la partie alimentation de gaz d'hydrogène différente (76) à un canal d'évacuation (18) et envoie une partie du gaz d'hydrogène évacué de l'étage de compression (12) et s'écoulant à travers le canal d'évacuation (18) vers la partie étanche au gaz (54).

11. Procédé pour faire fonctionner l'unité de compresseur (10) selon la revendication 1 ou 7, le procédé comprenant la réalisation de l'alimentation du gaz d'azote à l'intérieur de la partie adaptateur (37) par la partie alimentation de gaz d'azote (60) non seulement pendant un fonctionnement de l'étage de compression (12) mais également pendant l'arrêt de l'étage de compression (12).
